(19)

Europäisches Patentamt
European Patent Office
Office européen des brevets

(11)  EP 4 682 617 A1

(12)  **EUROPEAN PATENT APPLICATION**
published in accordance with Art. 153(4) EPC

(43) Date of publication:
**21.01.2026 Bulletin 2026/04**

(21) Application number: **24832205.9**

(22) Date of filing: **23.04.2024**

(51) International Patent Classification (IPC):
*G02B 27/01* (2006.01)       *G02B 9/12* (2006.01)
*G02B 27/10* (2006.01)       *G02B 27/28* (2006.01)
*G02B 27/09* (2006.01)       *G02B 3/02* (2006.01)
*G06F 1/16* (2006.01)       *G02B 27/00* (2006.01)
*G02B 1/04* (2006.01)       *G06T 19/00* (2011.01)

(52) Cooperative Patent Classification (CPC):
**G02B 27/286; G02B 1/11; G02B 9/12;
G02B 13/0035; G02B 27/0172; G02B 27/142**

(86) International application number:
**PCT/KR2024/005479**

(87) International publication number:
**WO 2025/005420 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.06.2023  KR 20230083284
11.10.2023  KR 20230135016**

(71) Applicant: **Samsung Electronics Co., Ltd.
Suwon-si, Gyeonggi-do 16677 (KR)**

(72) Inventor: **KIM, Youngran
Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54)  **WEARABLE ELECTRONIC DEVICE COMPRISING LENS ASSEMBLY**

(57)   A lens assembly is provided. The lens assembly comprises: a first lens which has positive refractive power, is fixed in position, and has a first film layer attached on one surface thereof; a second lens which has positive refractive power and is movable in position on the basis of the optical axis; and a third lens which has positive refractive power and is movable in position on the basis of the optical axis along with the second lens, wherein at least one of the second lens and the third lens has a mirror coating layer disposed on one surface thereof facing a display, the first lens, the second lens, and the third lens are sequentially arranged along the optical axis from the side of the eye of a user toward the display, and a ratio between a distance from the surface of the first lens at the side of the user's eye to an imaging surface of the display and a distance from the surface of the second lens at the side of the user's eye to the imaging surface of the display can satisfy the condition $1.55 > T_{diopter} / TTL$, where TTL denotes the distance from the surface of the first lens at the side of the user's eye to the imaging surface of the display, and $T_{diopter}$ denotes the distance from the surface of the second lens at the side of the user's eye to the imaging surface of the display.

FIG. 4

## Description

**[Technical Field]**

The disclosure relates to a wearable electronic device including a lens assembly.

**[Background Art]**

Portable electronic devices, such as electronic schedulers, portable multimedia players, mobile communication terminals, tablet personal computers (PCs), etc., are generally equipped with a display member and a battery, and may be limited in shape to a bar, clamshell, or slidable shape by their accompanying displays or batteries. As display members and batteries are nowadays made smaller and have enhanced performance, electronic devices (hereinafter, 'wearable electronic devices') which may be put on the user's wrist, head, or other body portions are appearing.

Examples of wearable electronic devices include head-mounted wearable devices (HMDs), smart glasses, smart watches (or bands), contact lens-type devices, ringtype devices, clothing/shoes/glove-type devices, and the like. Such body-worn electronic devices are easy to carry and may enhance user accessibility.

As an example, a 'head-mounted wearable device' is a device worn on the user's head or face, and is a device that projects an image onto the user's retina to view a virtual image in a three-dimensional space. Head-mounted wearable devices may be divided into a see-through type that provides augmented reality (AR) and a see-closed type that provides virtual reality (VR). The see-through type head mounted wearable device may be implemented in the form of glasses and may provide the user with, e.g., information, such as buildings and objects in the space within the user's field of view, in the form of images or text. The sea-closed type head-mounted wearable device may output independent images to the user's eyes, respectively, and provide the user with content (games, movies, streaming, broadcasting, etc.), which is provided from a mobile communication terminal or an external input, in the form of video or sound to thereby provide an excellent sense of immersion. Further, the head-mounted wearable device may be used to provide mixed reality (MR) or extended reality (XR), which is a combination of augmented reality (AR) and virtual reality (VR).

Recently, development of products related to head-mounted wearable devices is actively progressing. Head-mounted wearable devices are used for various purposes, such as military, gaming, industrial, and medical use. Accordingly, it is required to provide good image quality while in a lighter and smaller size.

The above information is presented as background information only to assist with an understanding of the disclosure. No determination has been made, and no assertion is made, as to whether any of the above might be applicable as prior art with regard to the disclosure.

**[Detailed Description of the Invention]**

**[Technical Solution]**

Aspects of the disclosure are to address at least the above-mentioned problems and/or disadvantages and to provide at least the advantages described below. Accordingly, an aspect of the disclosure is to provide a wearable electronic device including a lens assembly.

Additional aspects will be set forth in part in the description which follows and, in part, will be apparent from the description, or may be learned by practice of the presented embodiments.

In accordance with an aspect of the disclosure, a lens assembly is provided. The lens assembly includes a first lens having a positive refractive power and a fixed position, a second lens having a positive refractive power and being movable in position with respect to an optical axis, and a third lens having a positive refractive power and being movable in position with respect to the optical axis together with the second lens, wherein a first film layer is disposed between the first lens and the second lens, wherein a mirror coating layer is disposed on one surface, which is configured to face a display, of at least one of the second lens or the third lens, wherein the first lens, the second lens, and the third lens are sequentially disposed along the optical axis from a user's eye side to a display side, and wherein a ratio of a distance from one surface of the first lens facing the user's eye side to an imaging surface of the display to a distance from one surface of the second lens facing the user's eye side to the imaging surface of the display satisfies a condition defined by: $1.55 > T_{diopter} / TTL$, where 'total track length (TTL)' represents the distance from the user's eye side of the first lens to the imaging surface of the display, and 'Tdiopter' represents the distance from one surface of the second lens facing the user's eye side to the imaging surface of the display.

In accordance with another aspect of the disclosure, a wearable electronic device is provided. The wearable electronic device includes a lens assembly having at least three lenses arranged along an optical axis from a user's eye side to a display, wherein the lens assembly includes a first lens closest to the user's eye side, having a positive refractive power, and having a fixed position, a first film layer being attached onto one surface of the first lens, a second lens having a positive refractive power and repositionable with respect to the optical axis, and a third lens having a positive refractive power and repositionable together with the second lens with respect to the optical axis, and wherein a mirror coating layer is disposed on one surface, facing the display, of at least one of the second lens and the third lens.

Other aspects, advantages, and salient features of the disclosure will become apparent to those skilled in the art from the following detailed description, which, taken in conjunction with the annexed drawings, discloses various embodiments of the disclosure.

[Brief Description of Drawings]

The above and other aspects, features, and advantages of certain embodiment of the disclosure will be more apparent from the following description taken in conjunction with the accompanying drawings, in which:

FIG. 1 is a view illustrating a wearable electronic device according to an embodiment of the disclosure;
FIG. 2A is a front view illustrating a wearable electronic device according to an embodiment of the disclosure;
FIG. 2B is a rear view illustrating a wearable electronic device according to an embodiment of the disclosure;
FIG. 3 illustrates a state in which light output from a display is transferred to a user's eyes according to an embodiment of the disclosure;
FIG. 4 is a view illustrating a lens assembly 200 when a diopter is 0 according to an embodiment of the disclosure;
FIG. 5 is a view illustrating a lens assembly 200 when a diopter is -6 according to an embodiment of the disclosure;
FIG. 6A is a graph illustrating a spherical aberration of a lens assembly according to an embodiment of the disclosure;
FIG. 6B is a graph illustrating astigmatism of a lens assembly according to an embodiment of the disclosure;
FIG. 6C is a graph illustrating a distortion of a lens assembly according to an embodiment of the disclosure;
FIG. 7A is a graph illustrating a spherical aberration of a lens assembly according to an embodiment of the disclosure;
FIG. 7B is a graph illustrating astigmatism of a lens assembly according to an embodiment of the disclosure;
FIG. 7C is a graph illustrating a distortion of a lens assembly according to an embodiment of the disclosure;
FIG. 8 is a view illustrating a lens assembly 300 when a diopter is 0 according to an embodiment of the disclosure;
FIG. 9 is a view illustrating a lens assembly 300 when a diopter is -6 according to an embodiment of the disclosure;
FIG. 10A is a graph illustrating a spherical aberration of a lens assembly according to an embodiment of the disclosure;
FIG. 10B is a graph illustrating astigmatism of a lens assembly according to an embodiment of the disclosure;
FIG. 10C is a graph illustrating a distortion of a lens assembly according to an embodiment of the disclosure;
FIG. 11A is a graph illustrating a spherical aberration of a lens assembly according to an embodiment of the disclosure;
FIG. 11B is a graph illustrating astigmatism of a lens assembly according to an embodiment of the disclosure;
FIG. 11C is a graph illustrating a distortion of a lens assembly according to an embodiment of the disclosure;
FIG. 12 is a block diagram illustrating an electronic device in a network environment according to an embodiment of the disclosure; and
FIG. 13 is a block diagram illustrating an example of a camera module according to an embodiment of the disclosure.

The same reference numerals are used to represent the same elements throughout the drawings.

[Mode for Carrying out the Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalent.

It is to be understood that the singular forms "a," "an," and "the" include plural referents unless the context clearly dictates otherwise. Thus, for example, reference to "a component surface" includes reference to one or more of such surfaces.

The electronic device according to embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. In an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to one embodiment, each component (e.g., a module or a program) of the above-described components may include a single entity or multiple entities. Some of the plurality of entities may be separately disposed in different components. According to another embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth® chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, a microprocessor unit (MPU), a system on chip (SoC), an integrated circuit (IC), or the like.

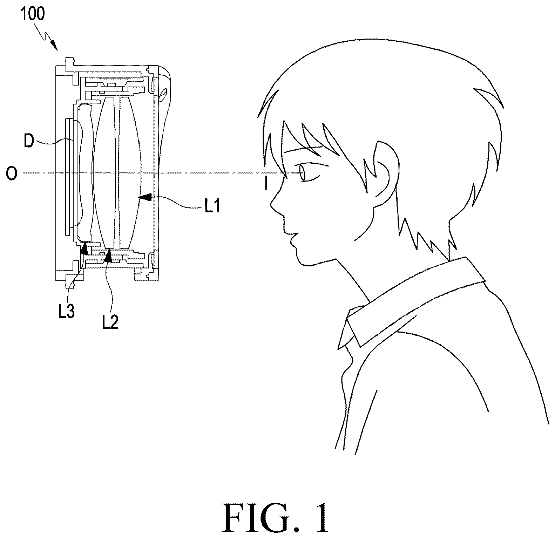

FIG. 1 illustrates a wearable electronic device according to an embodiment of the disclosure.

Referring to FIG. 1, the wearable electronic device 100 may be a glasses-type electronic device, and the user may visually recognize her surrounding objects or environment while wearing the wearable electronic device 100. The wearable electronic device 100 may, for example, obtain and/or recognize a visual image regarding the environment or an object in the direction in which the wearable electronic device 100 is oriented or the user views using the camera module and receive information about the object or environment from an external electronic device through a network. The wearable electronic device 100 may provide the received object- or environment-related information, in the form of an audio or visual form, to the user. In an example, the wearable electronic device 100 may provide the received object- or environment-related information, in a visual form, to the user through a display member. By implementing information about the object or environment in a visual form and combining them with a real image (or video) of the user's ambient environment, the wearable electronic device 100 may implement augmented reality (AR), virtual reality (VR), mixed Reality (MR), and/or extended reality (XR). The display member may output a screen in which the augmented reality object is added to the actual image (or video) of the environment around the user, thereby providing information regarding the surrounding thing or environment to the user.

In the following detailed description, the "state or position in which the electronic device or a designated component of the electronic device faces the user's face" may be mentioned in various manners and it should be noted that this presumes that the user wears the wearable electronic device 100.

In an embodiment, the wearable electronic device 100 may include at least one display member, a lens frame, and a wearing member. A pair of display members including a first display member and a second display member may be provided and be disposed to correspond to the user's right and left eyes, respectively, while the wearable electronic device 100 is worn on the user's body. In an embodiment, the wearable electronic device 100 may have a housing shape (e.g., goggles shape) including one display member corresponding to the right eye and the left eye.

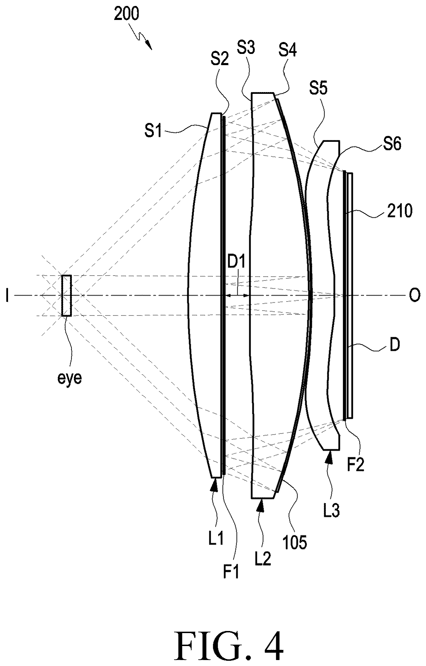

According to another embodiment, the display member is a component for providing the user with visual information. The display member may include, e.g., a lens assembly, a display D, and at least one sensor. The lens assembly and the display D each may be formed to be transparent or semi-transparent. However, the display member is not limited thereto. As another example, the display member may include a window member that may be a semi-parent glass or a member capable of adjusting its light transmittance depending on the concentration of coloring. As yet another example, the display member may include a reflective lens or a lens including a waveguide. An image output from the light output device (e.g., a projector) may form on each lens, providing the user with visual information. For example, the display member may mean a display that may include a waveguide (e.g., a light waveguide) in at least a portion of each lens and transfer the image (or light) output from the light output device through the waveguide included in the display member to the user's eye while simultaneously transferring the real world through the area to the user's eye in a see-through fashion. The lens assembly (e.g., the lens assembly 200 or 300 of FIGS. 4, 5, 6A to 6C, 7A to 7C, 8, 9, 10A to 10C, and 11A to 11C) is a component including a plurality of lenses (e.g., L1, L2, and L3) and be disposed to be aligned with the optical axis O-I in the space inside the wearable electronic device 100. Although some numbers are presented in describing an embodiment of the disclosure, it should be noted that the numbers do not limit the embodiment of the disclosure as long as the numbers are not set forth in the claims.

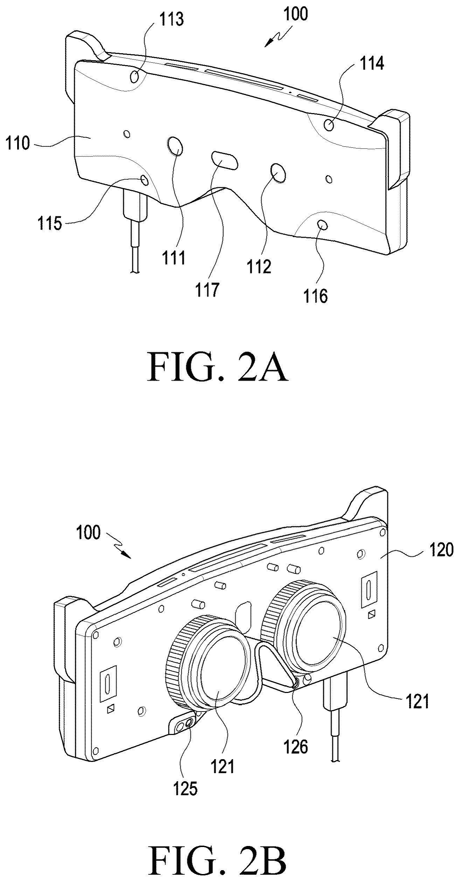

FIG. 2A is a front view illustrating a wearable electronic device according to an embodiment of the disclosure.

FIG. 2B is a rear view illustrating a wearable electronic device according to an embodiment of the disclosure.

The wearable electronic device 100 may be AR glasses or video see-through (VST) type VR glasses. In an embodiment, the VST-type VR glasses may capture the external environment by a camera (not shown) and display the captured external environment image, along with VR content, to the user through the display D. For example, the VR content may be content, such as navigation or data related to a specific object.

Referring to FIGS. 2A and 2B, in an embodiment, camera modules 111, 112, 113, 114, 115, and 116 and/or a depth sensor 117 for obtaining information related to the ambient environment of the wearable electronic device 100 may be disposed on the first surface 110 of the housing.

In one embodiment, the camera modules 111 and 112 may obtain images related to the ambient environment of the wearable electronic device.

In another embodiment, the camera modules 113, 114, 115, and 116 may obtain images while the wearable electronic device is worn by the user. The camera modules 113, 114, 115, and 116 may be used for hand detection, tracking, and recognition of the user gesture (e.g., hand motion). The camera modules 113, 114, 115, and 116 may be used for 3 degrees of freedom (DoF) or 6DoF head tracking, location (space or environment) recognition, and/or movement recognition. In an embodiment, the camera modules 111 and 112 may be used for hand detection and tracking and recognition of the user's gesture.

The depth sensor 117 may be configured to transmit a signal and receive a signal reflected from the user's eye and be used for identifying the distance to the object, such as time of flight (TOF).

According to an embodiment, camera modules 125 and 126 for face recognition and/or a display 121 (and/or lens) may be disposed on the second surface 120 of the housing.

The face recognition camera modules 125 and 126 adjacent to the display may be used for recognizing the user's face or may recognize and/or track both eyes of the user.

In another embodiment, the display 121 (and/or lens) may be disposed on the second surface 120 of the wearable electronic device 100. In an embodiment, the wearable electronic device 100 may not include the camera modules 115 and 116 among the plurality of camera modules 113, 114, 115, and 116. The wearable electronic device 100 may omit at least one of the components shown in FIGS. 2A and 2B or may further include components not shown in the drawings. For example, the wearable electronic device 100 may omit at least one of the camera modules or may include more camera modules.

According to an embodiment, the wearable electronic device 100 may have a form factor to be worn on the user's head. The wearable electronic device 100 may further include a strap and/or a wearing member to be fixed on the user's body part. The wearable electronic device 100 may provide the user experience based on augmented reality, virtual reality, and/or mixed reality while worn on the user's head.

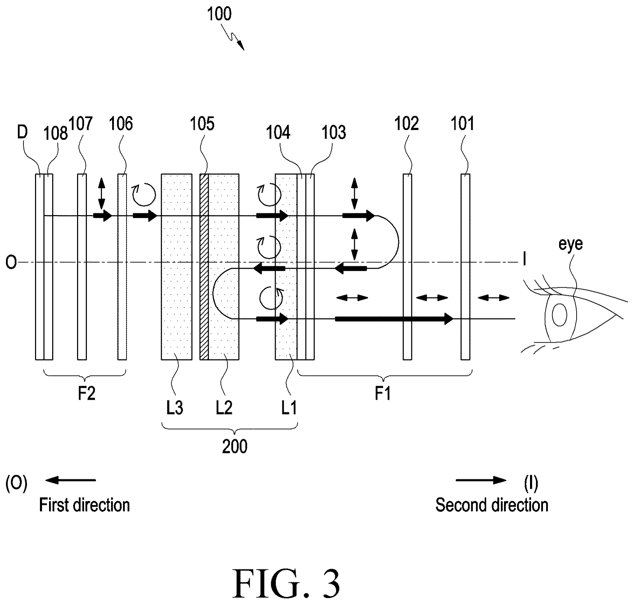

FIG. 3 illustrates a state in which light output from a display D is transferred to a user's eyes according to an embodiment of the disclosure.

A wearable electronic device 100 according to the disclosure may include a lens assembly 200, at least one film layer F1 and F2, and at least one mirror coating layer 105. The wearable electronic device 100 of the disclosure may, for example, provide a vision correction function to the user by adjusting the diopter as at least some lenses are movable and provide at least one film layer F1 and F2 and at least one mirror coating layer 105 to extend and/or adjust the length of the optical path of light, adjusting the focal length or increasing the quality of the output image. The lens assembly 200 is described below in detail with reference to embodiments of FIG. 4 and the subsequent views, and other components, e.g.,

at least one film layer F1 and F2 and at least one mirror coating layer 105, included in the wearable electronic device 100 are described in detail.

The wearable electronic device 100 of the disclosure may be an optical device (e.g., AR/VR glasses) that constitutes an optical system by being mounted along with a lens assembly 200 including a display D and a plurality of lenses. Here, the lens assembly 200 may include a plurality of (e.g., three) lenses (e.g., L1, L2, and L3). The display D may include a screen display area that exposes visual information to portions corresponding to the user's eyes when the user wears the wearable electronic device 100. The display D may include, e.g., a liquid crystal display (LCD), a light emitting diode (LED) display, an organic light emitting diode (OLED) display, or a microelectromechanical systems (MEMS) display, or an electronic paper display. The display D may display, e.g., various contents (e.g., text, images, videos, icons, or symbols) to the user.

The light output through the display D may pass through at least one film layer F1 and F2, at least one mirror coating layer 105, and the lens assembly 200 before various contents (e.g., text, images, videos, icons, or symbols) are transferred to the user through the display D. The order in which light passes through the at least one film layer F1 and F2, the at least one mirror coating layer 105, and the lens assembly 200 may be set in various manners according to embodiments. According to another embodiment, the first film layer F1 may be disposed adjacent to at least one of the two surfaces (e.g., the surface facing in the first direction or second direction) of the first lens L1 (hereinafter, referred to as a "first lens L1') from the user's eye in the lens assembly 200, and the mirror coating layer 105 may be disposed adjacent to the display-side surface (e.g., the surface facing in the first direction) of one of the second lens L2 (hereinafter, referred to as a 'second lens L2') from the user's eye or the third lens L3 (hereinafter, referred to as a 'third lens L3') from the user's eye in the lens assembly 200. The second film layer F2 may be disposed adjacent to one surface (e.g., the surface facing in the second direction) of the display D.

According to an embodiment, referring to FIG. 3, the first film layer F1 may be disposed adjacent to the surface on the side of the user's eye of the two surfaces of the first lens L1. The first film layer F1 may include a first polarizer (Pol) 101, a reflective polarizer (RP) 102, a first quarter wave plate (QWP) 103, and/or a first anti-reflection (AR) film 104.

According to another embodiment, the reflective polarizer (RP) 102 may be configured in the form of a film and be laminated with the quarter wave plate (QWP) 103 to form a first film layer F1 and be attached to the first lens L1. Here, 'lamination' may mean that two different members are bonded by an adhesive provided on at least one of the two members. The first film layer F1 in the laminated form of the quarter wave plate 103 and the reflective polarizer 102 may be thinner and provide more excellent optical properties than that in an embodiment in which they are not laminated but simply stacked to each other. According to yet another embodiment, referring to FIG. 3, the first film layer F1 may be disposed close to the user's eyes with respect to the lens assembly 200, selectively transmitting, reflecting, and/or blocking the light coming to the user's eyes.

The first anti-reflection (AR) film 104 may be defined as a film that prevents reflection of light. The first anti-reflection (AR) film 104 may be a film constituting the first film layer (F1).

In an embodiment, the mirror coating layer 105 may be formed on one surface (e.g., the surface facing in the first direction) of at least one of the second lens L2 or the third lens F3 facing the display D. The mirror coating layer 105 may be configured to transmit a portion of the light while reflecting another portion of the light. For example, the mirror coating layer 105 may be configured to transmit 50% of the light and reflect 50% of the light. FIG. 3 may illustrate a state in which the mirror coating layer 105 transmits 50% of the light. In another embodiment, the mirror coating layer 105 may be configured of a translucent mirror and be configured of, e.g., a mirror coated on one surface of the second lens L2 or third lens L3.

In the following description, the direction from the user's eyes to the display D may be referred to as a first direction, and as opposed to the first direction, the direction from the display D to the user's eyes may be referred to as a second direction. Both the first direction and the second direction may be parallel to the optical axis O-I. The lens assembly 200 may include a plurality of lenses (e.g., the first lens L1, the second lens L2, and the third lens L3) sequentially disposed along the first direction.

The wearable electronic device 100 may include a second film layer F2 that is disposed in a position farther than the user's eyes with respect to the lens assembly 200, i.e., close to the display D, to selectively transmit, reflect, and/or block the light coming to the lens assembly 200. In an example, the second film layer F2 may be disposed on the display D of the wearable electronic device 100. Here, the second film layer F2 may include a second quarter wave plate (QWP) 106, a second polarizer (Pol) 107, and/or a second anti-reflection (AR) film 108. For example, the second film layer F2 may not include a reflective polarizer (RP) (e.g., the reflective polarizer (RP) 102). The second film layer F2 may also be disposed in such a form that the second polarizer (Pol) 107, the second quarter wave plate (QWP) 106, and the second anti-reflection (AR) film 108 are laminated.

Referring to FIG. 3, the wearable electronic device 100 may operate as follows. The light output from the display D may pass through the second film layer F2, the lens assembly 200, and the first film layer F1 and then reach the user's eyes. In this case, the second polarizer 107 of the second film layer F2 may transmit first linearly polarized light, e.g., vertically polarized light (or p polarized light) but not transmit second linearly polarized light, e.g., horizontally polarized light (or s polarized light). For example, of the light reaching the second polarizer 107, the vertically polarized light (or p polarized light) only may be transmitted. The light transmitted through the second polarizer 107 may be, for example, converted into circularly polarized light (right-circularly polarized light or left-circularly polarized light) by the second quarter wave plate 106, and the circularly polarized light may pass through the lens assembly 200 and the mirror coating layer 105 and then reach the first film layer F1. The circularly polarized light reaching the first quarter wave plate 103 may be converted back into the linearly polarized light (e.g., vertically polarized light (or p polarized light)) while passing through the first quarter wave plate 103 and reach the reflective polarizer 102. The light may move in the second direction until it reaches the reflective polarizer 102. The light reaching the reflective polarizer 102 may be, for example, reflected by the reflective polarizer 102 in the first direction and be converted into circularly polarized light (right-circularly polarized light or left-circularly polarized light) while passing through the first quarter wave plate 103. The circularly polarized light (right-circularly polarized light or left-circularly polarized light) may be reflected by the mirror coating layer 105 in the second direction and, at this time, the phase may be shifted (e.g., from left-circularly polarized light to right-circularly polarized light, or from right-circularly polarized light to left-circularly polarized light). The phase-shifted circularly polarized light may pass through the first quarter wave plate 103 and the reflective polarizer 102 along the second direction and reach the user's eyes. In this case, the light passing through the first quarter wave plate 103 may be converted into the horizontally polarized light (or s polarized light) and reach the user's eyes. It should be noted that the embodiment of FIG. 3 is an example of a change in the state of the light passing through the wearable electronic device 100 according to an embodiment, and the category of the disclosure is not necessarily limited to the embodiment.

FIG. 4 is a view illustrating a lens assembly 200 when a diopter is 0 according to an embodiment of the disclosure.

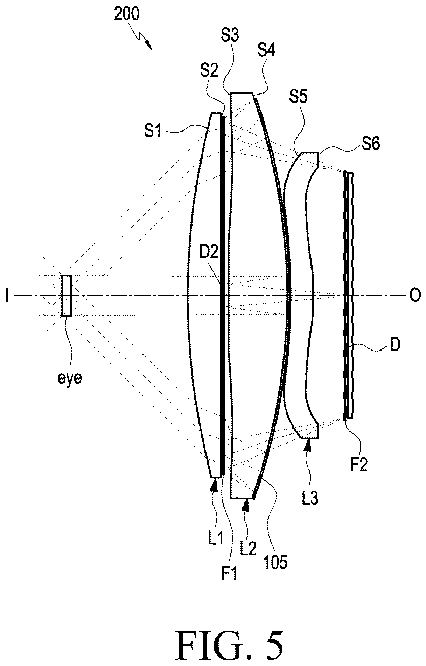

FIG. 5 is a view illustrating a lens assembly 200 when a diopter is -6 according to an embodiment of the disclosure.

Referring to FIGS. 4 and 5, according to an embodiment of the disclosure, a lens assembly 200 may include a plurality of lenses (e.g., L1, L2, and L3). At least one of the plurality of lenses L1, L2, and L3 included in the lens assembly 200 may include a lens formed of a synthetic resin (e.g., plastic) material. At least one of the plurality of lenses L1, L2, and L3 included in the lens assembly 200 may be implemented as a lens formed of synthetic resin (e.g., plastic) having a predetermined refractive index. In an embodiment, the plurality of lenses may be formed of a synthetic resin so as to have a high design freedom in size or shape. According to another embodiment, all of the lenses L1, L2, and L3 included in the lens assembly may be formed of a synthetic resin material. As such, as the plurality of lenses included in the lens assembly 200 are formed of a synthetic resin material, the wearable electronic device 100 where the lens assembly 200 is mounted may be advantageously made light and small.

The lens assembly 200 may be disposed on the optical axis O-I passing through the centers of the plurality of lenses from the object O (object side) on the display D to the user's eye-side I (image side). In the following description of the configuration of each lens, e.g., the user's eye side may indicate the direction in which the user's eye is positioned. Since an image is formed on the user's eye and the user recognizes the object, the user's eye may be regarded as serving as an image sensor. The "surface facing the user's eye side I" may be the surface on the side of the user's eye (e.g., image sensor) with respect to, e.g., the optical axis O-I and, in the drawings of the disclosure, means the right surface (or front surface) of the lens. The "surface facing the display (D) side O" may denote the left surface (or rear surface) of the lens with respect to the optical axis O-I in the drawings.

According to yet another embodiment, in describing the plurality of lenses (e.g., L1, L2, and L3), the portion of each lens, which is close to the optical axis O-I may be referred to as a chief portion, and the portion further from the optical axis O-I (or around the edge of the lens) may be referred to as a marginal portion. The chief portion may be, e.g., a portion of a lens (e.g., the first lens L1) which crosses the optical axis O-I. The marginal portion may be, e.g., a portion of the lens (e.g., the first lens L1) which is spaced apart from the optical axis by a predetermined distance. The marginal portion may include an end portion of the lens which is positioned farthest from the optical axis O-I of the lens. According to an embodiment of the disclosure, the light passing through the chief portion or the portion close to the chief portion may be referred to as a principal ray or a chief ray, and the light passing through the marginal portion may be referred to as a marginal ray.

The radius of curvature, thickness, total track length (TTL), and focal length of a lens as described herein may be in millimeters unless stated otherwise. The thickness of a lens, the interval between lenses, or TTL may be a distance measured from the center of the optical axis of the lens. In describing the shape of a lens, 'one surface of the lens is convex' may mean that the optical axis portion of the surface is convex, and 'one surface of the lens is convex' may mean that the optical axis portion of the surface is concave. Although one surface of a lens (e.g., the optical axis portion of the surface) is described as convex in shape, edge portions of the lens (e.g., portions a predetermined distance apart from the optical axis portion of the surface) may be concave. Likewise, although one surface of a lens (e.g., the optical axis portion of the surface) is described as concave in shape, edge portions of the lens (e.g., portions a predetermined distance apart from the optical axis portion of the surface) may be convex. The term 'inflection point' may mean a point where the radius of curvature changes between a negative (-) value and a positive (+) value in a portion which does not cross the optical axis.

According to an embodiment, the lens assembly 200 may include a first lens L1, a second lens L2, and a third lens L3. The first lens L1, the second lens L2, and the third lens L3 may be arranged in order from the side close to the eye to the display D when the user wears the wearable electronic device 100.

In another embodiment, the first lens L1 included in the lens assembly 200 may have a positive refractive power. If

EP 4 682 617 A1

light parallel with the optical axis is incident onto the lens with a positive refractive power, the light, after passing through the lens, may be focused. For example, the lens with a positive refractive power may be a lens based on the principle of a convex lens. In contrast, if parallel light is incident onto the lens with a negative refractive power, the light, after passing through the lens, may be dispersed. In another example, the lens with a negative refractive power may be a lens based on the principle of a concave lens. According to an embodiment, in the case of a lens assembly including three lenses, the first lens L1, the second lens L2, and the third lens L3 all may have a positive refractive power.

The first lens L1 included in the lens assembly 200 may include a 1-1th surface S1 facing the user's eye side I and a 1-2th surface S2 facing the object side O on the screen of the display D. The second lens L2 included in the lens assembly 200 may include a 2-1th surface S3 facing the user's eye side I and a 2-2th surface S4 facing the object side O on the screen of the display D. The third lens L3 included in the lens assembly 200 may include a 3-1th surface S5 facing the user's eye side I and a 3-2th surface S6 facing the object side O on the screen of the display D.

According to another embodiment, although not separately shown in the drawings, the lens assembly 200 may further include a filter between the last lens (e.g., the third lens L3) from the user's eye side and the display D. For example, the filter may transmit visible light and block infrared light. For example, the filter may include at least one of a low pass filter or a cover glass. In another example, as the filter is mounted, the color that the user feels when seeing the object displayed on the display may be closer to the color that the user feels when seeing the actual object. According to an embodiment, the filter between the third lens L4 and the display D may be implemented as one component constituting the second film layer F2 described above in the embodiment of FIG. 3.

In an embodiment, the first lens L1 included in the lens assembly 200 may have at least one surface configured as a flat surface. For example, the 1-1th surface S1 or the 1-2th surface S2 may be configured as a flat surface. According to an embodiment, the first film layer F1 may be attached to one surface configured as a flat surface of the first lens L1. For example, referring to FIGS. 4 and 5, the 1-2th surface S2 may be configured as a flat surface, and the first film layer F1 may be attached thereto. According to another embodiment, the first film layer F1 may be attached to one surface configured as a flat surface of the second lens L2. For example, referring to FIGS. 4 and 5, the 2-1th surface S3 may be configured as a flat surface, and the first film layer F1 may be attached thereto. According to yet another embodiment, the first film layer F1 may be disposed between the first lens L1 and the second lens L2. The first film layer F1 may include the first polarizer (Pol) 101, the reflective polarizer (RP) 102, the first quarter wave plate (QWP) 103, and the first anti-reflection (AR) film 104 as shown in FIG. 3. For example, referring to FIGS. 4 and 5, the 1-1th surface S1 may be configured as a convex surface facing the user's eye side I. For example, the first lens L1 may be a plano-concave type lens having a positive refractive power. Although not shown, the 1-1th surface S1 facing the user's eye side I of the first lens L1 may be configured as a flat surface, and the first film layer F1 may be attached onto the 1-1th surface S1. However, the shape and configuration of the first lens L1 are not limited to the above embodiment, and various design changes may be made thereto. According to an embodiment, at least one surface of the first lens L1 included in the lens assembly 200 may be configured as a flat surface, and another surface, which is not a flat surface, may be configured as an aspheric surface. For example, if the 1-2th surface S2 is a flat surface, the 1-1th surface S1 may be an aspheric surface. For example, if the 1-1th surface S1 is a flat surface, the 1-2th surface S2 may be an aspheric surface.

The position of the first lens L1 included in the lens assembly 200 may be fixed. As the position of the first lens L1 closest to the user's eye is fixed, the user's eye fatigue may be reduced.

According to an embodiment, one of the 2-2th surface S4 of the second lens L2 or the 3-2th surface S6 of the third lens L3 may include a convex surface (curved surface) formed to be convex in the direction toward the object on the display screen. Referring to FIGS. 4 and 5, the 2-2th surface S4 of the second lens L2, facing the object on the screen of the display D, may be a convex surface. The mirror coating layer 105 may be disposed on the convex 2-2th surface S4 of the second lens L2. The mirror coating layer 105 may allow the light passing through the first lens L1 and incident on the second lens L2 to reflected again and is output toward the first lens L1. For example, the second lens L2 is a lens having a positive refractive power, and may reflect or transmit light by applying the mirror coating layer 105 functioning to split rays to the 2-2th surface S4 facing the display D. As such, in the wearable electronic device 100 of the disclosure, the first film layer F1 may be attached to at least one surface of the first lens L1, and the mirror coating layer 105 may be applied to the second lens L2, reducing the overall size of the optical system while extending the length of the optical path of incident light. The 2-1th surface S3 and/or the 2-2th surface S4 of the second lens L2 included in the lens assembly 200 may be configured as an aspheric surface.

According to an embodiment, at least a portion of the 3-1th surface S5 and/or the 3-2th surface S6 of the third lens L3 included in the lens assembly 200 may be convex, and at least a portion thereof may be concave. In an example, the chief portion of the 3-1th surface S5 and/or the 3-2th surface S6 may include a curve convex toward the display D, and the marginal portion thereof may include a concave curve, providing advantages in directly correcting the light according to the plurality of lenses. According to an embodiment, the 3-1th surface S5 and/or the 3-2th surface S6 of the third lens L3 included in the lens assembly 200 may be configured as an aspheric surface.

The wearable electronic device 100 of the disclosure may be configured so that the second lens L2 and the third lens L3 are movable with respect to the first lens L1 with the first lens L1 fixed in the wearable electronic device 100, performing a vision correction function according to diopter adjustment. The wearable electronic device 100 of the disclosure may apply the vision correction function without performance deterioration by moving the second lens L2 and the third lens L3.

The wearable electronic device 100 including the above-described lens assembly 200 may configure an optical system that meets Conditional Equation 1.

[Conditional Equation 1]

$$0.65 \leq TTL / ImgH \leq 1.0$$

Here, total track length (TTL) may be the distance from the eye-side surface (e.g., the 1-1th surface S1) of the first lens (e.g., the first lens L1) on the side of the user's eyes to the imaging surface of the display D, and ImgH may be the maximum image height of the display D. The optical system of the disclosure may assume that the screen output from the display is recognized by the cornea of the user's eye. Therefore, the 'maximum image height' is related to the size of the display D on which an object may be displayed, and may mean half of the diagonal length of the display D. [ 1 is an equation for a ratio of the total length (TTL) of the entire optical system and the maximum image height ratio used in the display D. When the value is larger than the upper limit of Conditional Equation 1, it may be difficult to minimize the size of the optical system.

The wearable electronic device 100 including the above-described lens assembly 200 may configure an optical system that meets Conditional Equation 2.

[Conditional Equation 2]

$$1.55 > T_{diopter} / TTL$$

Here, TTL may be the distance from the eye-side surface (e.g., the 1-1th surface S1) of the first lens (e.g., the first lens L1) on the side of the user's eyes to the imaging surface of the display D, and $T_{diopter}$ may denote the distance from the eye-side surface (e.g., the 2-1th surface S3) of the vision correction lens (e.g., the second lens L2) to the imaging surface of the display D. The optical system of the disclosure may assume that the screen output from the display D is recognized by the cornea of the user's eye. Conditional Equation 2 is an equation for the ratio of the total length TTL of the overall optical system to the distance from the vision correction lens (e.g., the second lens L2) to the imaging surface of the display. When being larger than the upper limit of Conditional Equation 2, the moving distance of the vision correction lens (e.g., the second lens L2 or the third lens L3) for vision correction may increase, increasing the size of the overall optical system.

In the wearable electronic device 100 of the disclosure, the lens surface to which the mirror coating layer 105 is applied may meet Conditional Equation 3 below.

[Conditional Equation 3]

$$L_{Radius} < -50$$

Here, $L_{Radius}$ may be the refractive power of the lens surface to which the mirror coating layer 105 is applied.

In the wearable electronic device 100 of the disclosure, all the lenses included in the lens assembly may be configured as plastic aspheric lenses. In an example, it is possible to secure performance in an ultra-compact size and advantageously decrease manufacturing costs compared to glass lenses by configuring all of the three lenses as plastic aspheric lenses.

The wearable electronic device 100 of the disclosure may be an optical system in which the lens configuration of the entire optical system is configured to have positive, positive, and positive power from the eyes.

Table 1 below shows various lens data of the lens assembly 200 shown in FIGS. 4 and 5, e.g., information about the lens positioned on the light traveling path in the lens assembly 200 including three lenses. 'eye' may refer to the user's eye. radius may mean the radius of curvature of the lens, thickness the thickness of the lens or air gap, and the refractive index of the medium (e.g., lens), and vd the Abbe's number of the lens. Regarding the thickness, the thickness marked on the surface (e.g., the 1-1th surface S1) of a certain lens (e.g., the first lens L1) facing the user's eye side I may mean the thickness of the lens, and the thickness marked on the surface (e.g., the 1-2th surface S2) of a certain lens (e.g., the first lens L1) facing the display side O may be described as an air gap from the lens to the lens (e.g., the second lens L2) positioned behind along the optical axis direction. In the embodiment of FIGS. 4 and 5, 'S1 to S6' may refer to the user's eye-side (I) or display-side (O) surfaces of the plurality of related lenses (e.g., L1, L2, and L3). In an example, 'S1' may be a position considered in design of the lens assembly 200, rather than the actual lens surface. In Table 1 below, '1' marked on the surface may indicate the position of the stop. In the disclosure, the position of the stop in Table 1 may correspond to the pupil inside the user's cornea.

In Table 1, '2 to 16' marked on the surface may denote the surface of the plurality of lenses (e.g., L1, L2, and L3), the first film layer F1, the mirror coating layer 105, and the second film layer F2 positioned on the traveling path of light when the light passes through the plurality of lenses (e.g., L1, L2, and L3). Through Table 1 below, information about the moving path of the light passing through the plurality of lenses (e.g., L1, L2, and L3), the first film layer F1, the mirror coating layer 105, and the second film layer F2, as well as information about the plurality of lenses (e.g., L1, L2, and L3), the first film layer F1, the mirror coating layer 105, and the second film layer F2 may be identified.

For example, '2' on the surface may indicate the user's eye-side (I) 1-1th surface S1 of the first lens L1. '3' on the surface may indicate the display-side (O) 1-2th surface S2 of the first lens L1. '4' on the surface may indicate one surface of the first film layer F1. Thickness of '4' on the surface may indicate the distance between the second lens L2 and the first lens L1 when the diopter is 0 and -6 as provided through Table 2 below Table 1. '5' on the surface may indicate the user's eye-side 2-1th surface S3 of the second lens L2. '6' on the surface may indicate the display-side (O) 2-2th surface S4 of the second lens L2 and the mirror coating layer 105. The light passing through the lens assembly 200 of the disclosure may, for example, be reflected by the first film layer F1 including the reflective polarizer 102 and/or the mirror coating layer 105 and move. For example, the light may be reflected from the display-side (O) 2-2th surface S4 of the second lens L2 to which the mirror coating layer 105 is applied and then pass through the 2-1th surface S3 facing the user's eye side I of the second lens L2 and reach the display-side (O) 1-2th surface S2 of the first lens L1. The light re-reflected by the display-side (O) 1-2th surface S2 of the first lens L1 which is attached with the first film layer F1 may pass through the 2-1th surface S3 facing the user's eye side I of the second lens L2 and the display-side (O) 2-2th surface S4 of the second lens L2. Information about the refraction and/or reflection of the optical path may be provided through data defined by 6, 7, 8, and 9 on the surface in Table 1 below. As described above, '6' on the surface indicates the display-side (O) 2-2th surface S4 of the second lens L2 and may, for example, include information when the light is reflected by the mirror coating layer 105. In Table 1, a negative (-) thickness may mean that light directed in one direction (e.g., the first direction or second direction) is reflected by the portion (e.g., the display-side (O) 2-2th surface S4 of the second lens L2) and travels in the opposite direction. '7' on the surface may indicate the user's eye-side (I) 2-1th surface S3 of the second lens L2 and may include information about the light when the light is reflected by the display-side (O) 2-2th surface S4 of the second lens L2 and reaches the user's eye-side (I) 2-1th surface S3. The light which passes through the user's eye-side (I) 2-1th surface S3 of the second lens L2 and reaches the display-side (O) 1-2th surface S2 of the first lens L1 may be reflected from the reflective polarizer and propagate toward the second lens L2. In Table 1, '8' on the surface may indicate the reflective polarizer, and '9' on the surface may indicate the user's eye-side (I) 2-1th surface S3 of the second lens L2. '10' on the surface may indicate the display-side (O) 2-2th surface S4 of the second lens L2. '11' on the surface may indicate the user's eye-side (I) 3-1th surface S5 of the third lens L3. '12' on the surface may indicate the display-side (O) 3-2th surface S6 of the third lens L3. Thickness of '12' on the surface may indicate the distance between the third lens L3 and the display D when the diopter is 0 and -6 as provided through Table 2 below Table 1. '13' on the surface may indicate the user's eye-side (I) surface of the second film layer F2. '14' on the surface may indicate the display-side (O) surface of the second film layer F2. Here, as described above, the second film layer F2 may include a second quarter wave plate (QWP) 106, a second polarizer (Pol) 107, and a second anti-reflection (AR) film layer 108. 'img' on the surface may indicate an image of an object output on the surface of the display D. Meanwhile, in Table 1 below, the surface marked with '*' along with '2 to 14' marked on the surface may mean that the surface of the lens correspond thereto is formed as an aspheric surface.

When the total effective focal length (EFL) is 12.6mm, the F number (Fno) is about 3.15, and the optical total length from image plane (OTTL) is about 14.91mm to about 15.95mm, the lens assembly 200 included in Table 1 may meet the above-described conditions (and/or at least one of the above-described conditions).

[Table 1]

| Surface | Radius | Thickness | EFL | nd | Vd |
|---|---|---|---|---|---|
| 1(stop) | infinity | 12 | | | |
| 2* | 64.78103 | 3.332391 | 119.1485 | 1.5437 | 56.05 |
| 3 | infinity | 0.3 | | | |
| 4 | infinity | D1 | | | |

(continued)

| Surface | Radius | Thickness | EFL | nd | Vd |
|---|---|---|---|---|---|
| 5* | 254.6698 | 5.421776 | 90.6262 | 1.54377 | 56.31 |
| 6* | -60.6456 | -5.42178 | 19.8169 | -1.54377 | 56.31 |
| 7* | 254.6698 | -2.50882 | | | |
| 8 | infinity | 2.508818 | | | |
| 9* | 254.6698 | 5.421776 | 90.6262 | 1.54377 | 56.31 |
| 10* | -60.6456 | 0.614049 | | | |
| 11* | -41.4158 | 2.200429 | 112.0061 | 1.62847 | 24.87 |
| 12* | -26.6093 | D2 | | | |
| 13 | infinity | 0.25 | | | |
| 14 | infinity | 0.5 | | | |
| img | infinity | 0 | | | |

[Table 2]

| | 0 D | -6D |
|---|---|---|
| D1 | 2.508818214 | 0.617549365 |
| D2 | 1.003754922 | 2.896588511 |

The embodiment of FIGS. 4 and 5 is described again with reference to Tables 1 and 2 above. It may be identified that at 0 diopter, the distance D1 between the first lens L1 and the second lens L2 is about 2.5mm and, at -6 diopters, the distance D1 between the first lens L1 and the second lens L2 is 0.61mm. It may be identified that at 0 diopter, the distance D2 between the third lens L3 and the display D is about 1.00 mm, and at -6 diopter, the distance D2 between the third lens L3 and the display D is about 2.89mm. Table 3 below shows the aspheric coefficients of the plurality of lenses (e.g., L1, L2, and L3), which may be calculated by Conditional Equation 4 as follows:

[Conditional Equation 4]

$$x = \frac{c'y^2}{1 + \sqrt{1 - (K + 1)c'^2 y^2}} + Ay^4 + By^6 + Cy^8 + Dy^{10} + Ey^{12} + Fy^{14} + Gy^{16}$$

Here, 'x' may mean the distance sag from the vertex of the lens to the optical axis O-I, 'c'' the reciprocal of the radius of curvature at the vertex of the lens, 'y' the distance in the direction perpendicular to the optical axis, 'K' the Conic constant, and 'A,' 'B,' 'C,' 'D,' 'E,' 'F,' and 'G' the aspheric coefficients. In the numerical values of Table 3 below, 'E and the following number' may denote a power of 10. For example, E+01 may be $10^1$, and E-02 may be $10^{-2}$. In Table 3, '2' on the surface may indicate the user's eye-side (I) 1-1th surface S1 of the first lens L1. '5, 7, and 9' on the surface are aspheric surfaces for the same surface of substantially the same lens, and may indicate the user's eye-side 2-1th surface S3 of the second lens L2. '6 and 10' on the surface are also aspheric surfaces for the same surface of substantially the same lens, and may, for example, indicate the display-side 2-2th surface S4 of the second lens L2. '11' on the surface may indicate the user's eye-side 3-1th surface S5 of the third lens L3. '12' on the surface may indicate the display-side 3-2th surface S6 of the third lens L3. Referring to Table 3, in the lens assembly 200 according to an embodiment, the user's eye-side 1-1th surface S1 of the first lens L1, the user's eye-side 2-1th surface S3 and display-side 2-2th surface S4 of the second lens L2, and the user's eye-side 3-1th surface S5 and display-side 3-2th surface S6 of the third lens L3 may be formed as aspheric surfaces.

[Table 3]

|  | 2 | 5 | 6 | 7 | 9 | 10 | 11 | 12 |
|---|---|---|---|---|---|---|---|---|
| K | -0.29872 | 46.7563 1 | -1.99847 | 46.7563 1 | 46.7563 1 | -1.99847 | -11.3357 | -44.9482 |
| A | 1.24E-07 | 3.80E-05 | 1.08E-05 | 3.80E-05 | 3.80E-05 | 1.08E-05 | 2.37E-05 | -1.96E-05 |
| B | 1.16E-07 | -4.66E-07 | -9.30E-08 | -4.66E-07 | -4.66E-07 | -9.30E-08 | -1.37E-06 | -1.43E-06 |
| C | -1.45E-09 | 2.83E-09 | 4.60E-10 | 2.83E-09 | 2.83E-09 | 4.60E-10 | 4.29E-08 | 5.82E-08 |
| D | 9.32E-12 | -1.12E-11 | -1.60E-12 | -1.12E-11 | -1.12E-11 | -1.60E-12 | -4.74E-10 | -7.01E-10 |
| E | -3.51E-14 | 2.93E-14 | 3.89E-15 | 2.93E-14 | 2.93E-14 | 3.89E-15 | 2.69E-12 | 4.37E-12 |
| F | 7.31E-17 | -4.57E-17 | -5.96E-18 | -4.57E-17 | -4.57E-17 | -5.96E-18 | -7.92E-15 | -1.42E-14 |
| G | -6.67E-20 | 3.20E-20 | 4.05E-21 | 3.20E-20 | 3.20E-20 | 4.05E-21 | 9.52E-18 | 1.90E-17 |
| H | 0.00E+0 0 | 0.00E+0 0 | 0.00E+0 0 | 0.00E+0 0 | 0.00E+0 0 | 0.00E+0 0 | 0.00E+0 0 | 0.00E+0 0 |
| J | 0.00E+0 0 | 0.00E+0 0 | 0.00E+0 0 | 0.00E+0 0 | 0.00E+0 0 | 0.00E+0 0 | 0.00E+0 0 | 0.00E+0 0 |

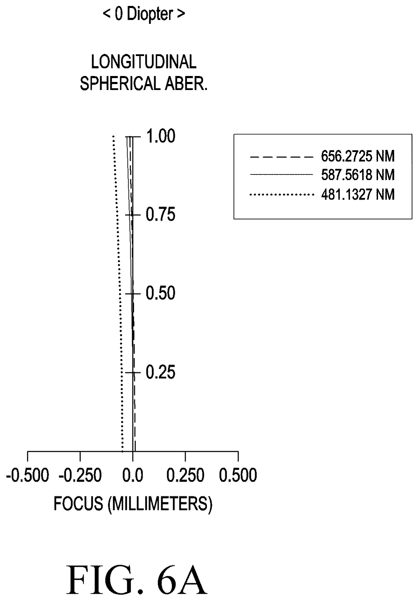

FIG. 6A is a graph illustrating a spherical aberration of a lens assembly according to an embodiment of the disclosure.

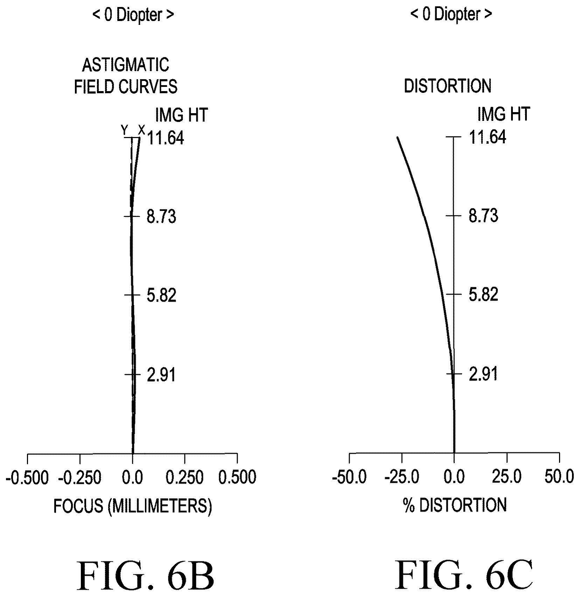

FIG. 6B is a graph illustrating astigmatism of a lens assembly according to an embodiment of the disclosure.

FIG. 6C is a graph illustrating a distortion of a lens assembly according to an embodiment of the disclosure.

FIGS. 6A to 6C may show aberrations of a lens assembly when a diopter is 0 (e.g., the embodiment of FIG. 4).

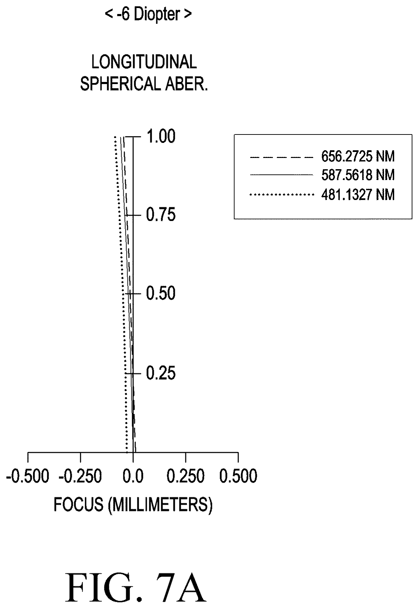

FIG. 7A is a graph illustrating a spherical aberration of a lens assembly according to an embodiment of the disclosure.

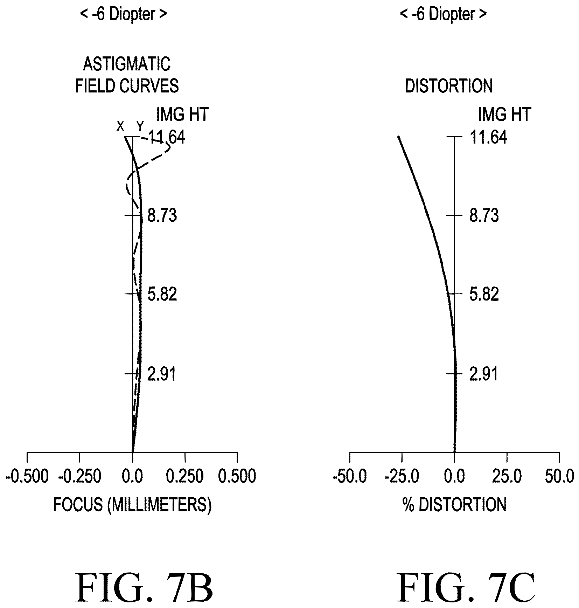

FIG. 7B is a graph illustrating astigmatism of a lens assembly according to an embodiment of the disclosure.

FIG. 7C is a graph illustrating a distortion of a lens assembly according to an embodiment of the disclosure.

FIGS. 7A to 7C may show aberrations of a lens assembly when a diopter is -6 (e.g., the embodiment of FIG. 5).

FIGS. 6A and 7A are graphs illustrating spherical aberration of a lens assembly 200, according to various embodiments of the disclosure.

Spherical aberration may refer to the phenomenon that light beams passing through different portions (e.g., the chief portion and the marginal portion) of the lens are focused on different positions.

Referring to FIGS. 6A and 7A, the horizontal axis refers to the degree of longitudinal spherical aberration, and the vertical axis refers to the result of normalization of the distance from the center of the optical axis. FIGS. 6A and 7A may illustrate variations in longitudinal spherical aberration depending on light wavelengths. The longitudinal spherical aberration may be shown for each of light beams whose wavelengths are about 656.2725 nanometers (nm), about 587.5618nm, or about 486.1327nm. Referring to FIGS. 6A and 7A, in a visible light range, the longitudinal spherical aberration of the lens assembly, according to various embodiments of the disclosure, may be limited to be within a range from about +0.050 to -0.050 so that stable optical properties are shown, except for the light having a wavelength of 481.1327nm.

FIGS. 6B and 7B are graphs illustrating astigmatism of the lens assembly 200, according to various embodiments of the disclosure.

Astigmatism may refer to a deviation between the focuses of the light beams passing in the vertical and horizontal directions when the tangential plane or meridian plane of the lens has a different radius from the radius of the sagittal plane of the lens. The tangential plane may be a surface including a curve on the lens positioned in a direction substantially perpendicular to the optical axis from the vertex of the lens, and the sagittal plane may be a surface including a curve on the lens positioned in a second direction substantially perpendicular to the optical axis from the vertex of the lens. In FIGS. 6B and 7B, the vertical axis IMG HT may denote the image height. Here, the image height may mean the maximum distance from the optical axis O-I to the edge of the display D (half of the diagonal length of the display screen of the display D).

Referring to FIGS. 6B and 7B, the astigmatism of the lens assembly 200 is the result obtained at a wavelength of about 587.5618nm, wherein the dashed line Y may denote the astigmatism in the tangential plane direction (e.g., tangential field curvature), and the solid line X may denote the astigmatism in the sagittal plane direction (e.g., sagittal field curvature). It can be identified from FIGS. 6B and 7B that the astigmatism may be limited to a range from about +0.050 to -0.050 so that stable optical properties may be shown according to an embodiment of the disclosure.

FIGS. 6C and 7C are graphs illustrating distortion of the lens assembly 200, according to various embodiments of the disclosure.

Distortion occurs because the optical magnification varies depending on the distance from the optical axis O-I. As compared with an image forming on a theoretical imaging plane, an image forming on the actual imaging plane may be shown to be larger or smaller by distortion.

FIGS. 6C and 7C show the results of distortion of the lens assembly 200, which are obtained in a wavelength of about 587.5618nm. The image captured by the lens assembly 200 may, for example, cause distortion at a point (e.g., marginal portion) off the optical axis O-I. However, the distortion is a degree that may commonly occur in an optical device using a lens, and the lens assembly 200 according to one of various embodiments of the disclosure has a distortion rate of less than about ±25 % and may provide good optical properties.

The description of the lens assembly 200 according to the foregoing embodiments may apply to lens assemblies 200 and 300 described below according to another embodiment. Some of the plurality of lens assemblies 200 and 300 may have the same lens attribute (e.g., field of view, focal length, auto-focusing, f number, or optical zoom), or at least one lens assembly may have one or more lens attributes different from those of another lens assembly.

In describing the following embodiment of the disclosure, the same or similar, or no reference characters are given for components which may readily be appreciated from the above-described embodiments. No detailed description thereof is presented below as long as it overlaps the above description.

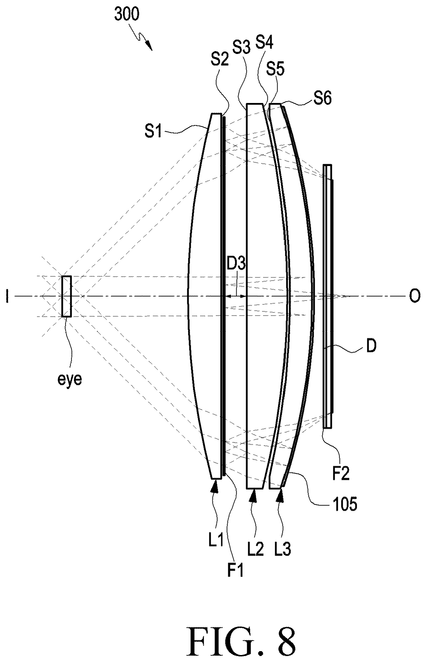

FIG. 8 is a view illustrating a lens assembly 300 when the diopter is 0 according to an embodiment of the disclosure.

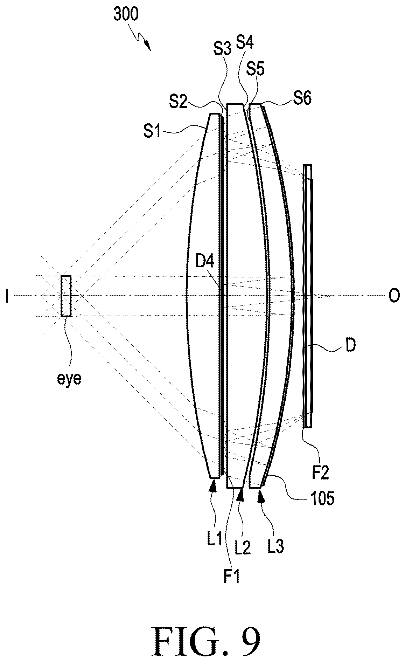

FIG. 9 is a view illustrating a lens assembly 300 when the diopter is -6 according to an embodiment of the disclosure.

Referring to FIGS. 8 and 9, according to various embodiments of the disclosure, a lens assembly 300 may include a plurality of lenses (e.g., L1, L2, and L3). Here, unlike in the embodiment of FIGS. 4 and 5, in the lens assembly 300 according to the embodiment shown in FIGS. 8 and 9, the 3-2th surface S6 of the third lens L3 facing the object O on the screen of the display D has a convex shape, and the mirror coating layer 105 may be disposed on the 3-2th surface S6.

In an embodiment, referring to FIGS. 8 and 9, the 3-2th surface S6 of the third lens L3, facing the object on the screen of the display D, may be a convex surface. According to another embodiment, the mirror coating layer 105 may be disposed on the convex 3-2th surface S6 of the third lens L3. The mirror coating layer 105 may allow the light passing through the second lens L2 and incident on the third lens L3 to reflected again and is output toward the first lens L1. For example, the third lens L3 is a lens having a positive refractive power, and may reflect or transmit light by applying the mirror coating layer 105 functioning to split rays to the 3-2th surface S6 facing the display D. As such, in the wearable electronic device 100 of the disclosure, the first film layer F1 may be attached to at least one surface of the first lens L1, and the mirror coating layer 105 may be applied to the third lens L3, reducing the overall size of the optical system while extending the length of the optical path of incident light. Unlike in the embodiment of FIGS. 4 and 5, in the lens assembly 300 according to the embodiment shown in FIGS. 8 and 9, the 3-2th surface S6 of the third lens L3 facing the object O on the screen of the display D has a convex shape, and the mirror coating layer 105 may be disposed on the 3-2th surface S6, thereby further extending the light beams and further minimizing the size of the optical system.

Tables 4 and 5 below may, for example, represent various lens data about the lens assembly 300 according to the embodiment of FIGS. 8 and 9. Table 6 below may show data for defining the aspheric coefficients of the plurality of lenses (e.g., L1, L2, and L3).

In Table 4, '2 to 18' marked on the surface may denote the surface of the lens, the first film layer F1, the mirror coating layer 105, and the second film layer F2 positioned on the traveling path of light when the light passes through the plurality of lenses (e.g., L1, L2, and L3). Through Table 4 below, information about the moving path of the light passing through the lens, the first film layer F1, the mirror coating layer 105, and the second film layer F2, as well as information about the lens, the first film layer F1, the mirror coating layer 105, and the second film layer F2 may be identified.

For example, '2' on the surface may indicate the user's eye-side (I) 1-1th surface S1 of the first lens L1. '3' on the surface may indicate the display-side (O) 1-2th surface S2 of the first lens L1. '4' on the surface may indicate one surface of the first film layer F1. Thickness of '4' on the surface may indicate the distance between the second lens L2 and the third lens L3 when the diopter is 0 and -6 as provided through Table 5 below Table 4. '5' on the surface may indicate the user's eye-side 2-1th surface S3 of the second lens L2. '6' on the surface may indicate the display-side (O) 2-2th surface S4 of the second lens L2. '7' on the surface may indicate the user's eye-side 3-1th surface S5 of the third lens L3. '8' on the surface may indicate the display-side (O) 3-2th surface S6 of the third lens L3 and the mirror coating layer 105. The light passing through the lens assembly 200 of the disclosure may, for example, be reflected by the first film layer F1 including the reflective polarizer 102 and/or the mirror coating layer 105 and move. For example, light may be reflected by the display-side (O) 3-2th surface S6 of the third lens L3 to which the mirror coating layer 105 is applied, then pass through the user's eye-side (I) 3-1th surface S5 ('9' on the surface) of the third lens L2, the display-side (O) 2-2th surface S4 ('10' on the surface) of the second lens L2, and the user's eye-side (I) 2-1th surface S3 ('11' on the surface) of the second lens L2, and then reach one surface ('12' on the surface) of the first film layer F1. The light re-reflected by the display-side (O) 1-2th surface S2 of the first lens L1 to which the first film layer F1 is attached may again pass through the user's eye-side (I) 2-1th surface S3 ('13' on the surface) of the second lens L2, the display-side (O) 2-2th surface S4 ('14' on the surface) of the second lens L2, the user's eye-side (I) 3-1th surface S5 ('15' on the surface) of the third lens L3, and the display-side (O) 3-2th surface S6 ('16' on the surface) of the third lens L3. Information about the refraction and/or reflection of the optical path may be provided through data defined by 9, 10, 11, 12, 13, 14, 15, and 16 on the surface in Table 4 below. As described above, '8' on the surface indicates the display-side (O) 3-2th surface S6 of the third lens L3 and may, for example, include information when the light is reflected by the mirror coating layer 105. In Table 4, a negative (-) thickness may mean that light directed in one direction (e.g., the first direction or second direction) is reflected by the portion (e.g., the display-side (O) 3-2th surface S6 of the third lens L3) and travels in the opposite direction. '9' on the surface may indicate the user's eye-side (I) 3-1th surface S5 of the second lens L2 and may include information about the light when the light is reflected by the display-side (O) 3-2th surface S4 of the second lens L2 and reaches the user's eye-side (I) 3-1th surface S3. The light which passes through the user's eye-side (I) 2-1th surface S3 of the second lens L2 and reaches the display-side (O) 1-2th surface S2 of the first lens L1 may be reflected from the reflective polarizer and propagate toward the second lens L2. In Table 4, '12' on the surface may, for example, indicate the reflective polarizer, and '13' on the surface may indicate the user's eye-side (I) 2-1th surface S3 of the second lens L2. '14' on the surface may indicate the display-side (O) 2-2th surface S4 of the second lens L2. '15' on the surface may indicate the user's eye-side (I) 3-1th surface S5 of the third lens L3. '16' on the surface may indicate the display-side (O) 3-2th surface S6 of the third lens L3. Thickness of '16' on the surface may indicate the distance between the third lens L3 and the display D when the diopter is 0 and -6 as provided through Table 5 below Table 4. '17' on the surface may indicate the user's eye-side (I) surface of the second film layer F2. '18' on the surface may indicate the display-side (O) surface of the second film layer F2. As described above, the second film layer F2 may include a second quarter wave plate (QWP) 106, a second polarizer

(Pol) 107, and a second anti-reflection (AR) film layer 108. 'img' on the surface may indicate an image of an object output on the surface of the display D. Meanwhile, in Table 4 below, the surface marked with '*' along with '2 to 18' marked on the surface may mean that the surface of the lens opposite thereto is formed as an aspheric surface.

When the total effective focal length (EFL) is 12.6mm, the F number (Fno) is about 3.15, and the optical total length from image plane (OTTL) is about 14.91mm to about 15.95mm, the lens assembly 200 included in Table 4 may meet the above-described conditions (and/or at least one of the above-described conditions).

[Table 4]

| Surface | Radius | Thickness | EFL | nd | Vd |
|---|---|---|---|---|---|
| 1 (stop) | infinity | 12 | | | |
| 2 | 50.50019 | 4.40392964 | 92.8825 | 1.5437 | 56.05 |
| 3 | infinity | 0.3 | | 1.5168 | 64.17 |
| 4* | infinity | D1 | | | |
| 5* | -702.909 | 4.02686058 | 121.093 | 1.5437 | 56.05 |
| 6* | -60.3211 | 0.30000153 | | | |
| 7* | -84.9153 | 2.10781152 | 378.0853 | 1.5437 | 56.05 |
| 8* | -60.6176 | -2.1078115 | 72.8666 | -1.5437 | 56.05 |
| 9 | -84.9153 | -0.3000015 | | | |
| 10* | -60.3211 | -4.0268606 | | | |
| 11* | -702.909 | -2.3267115 | 25.6749 | -1.5437 | 56.05 |
| 12* | infinity | 2.32671151 | | | |
| 13* | -702.909 | 4.02686058 | | | |
| 14* | -60.3211 | 0.30000153 | 121.093 | 1.5437 | 56.05 |
| 15* | -84.9153 | 2.10781152 | | | |
| 16* | -60.6176 | D2 | 378.0853 | 1.5437 | 56.05 |
| 17 | infinity | 0.25 | | | |
| 18 | infinity | 0.5 | | 1.5168 | 64.17 |
| img | infinity | 0 | | 1.5168 | 64.2 |

[Table 5]

|  | 0 D | -6D |
|---|---|---|
| D1 | 2.326711514 | 0.59894618 |
| D2 | 1.250181127 | 2.975533326 |

The embodiment of FIGS. 8 and 9 is described again with reference to Tables 4 and 5 above. It may be identified that at 0 diopter, the distance D1 between the first lens L1 and the second lens L2 is about 2.32mm and, at -6 diopters, the distance D1 between the first lens L1 and the second lens L2 is 0.59mm. It may be identified that at 0 diopter, the distance D2 between the third lens L3 and the display D is about 1.25 mm, and at -6 diopter, the distance D2 between the third lens L3 and the display D is about 2.97mm.

In Table 6 below, '4 and 12' on the surface are aspheric surfaces for the same surface of substantially the same lens, and may indicate the display-side 1-2th surface S2 of the first lens L1. '5, 11, and 13' on the surface may indicate the user-side 2-1th surface S3 of the second lens L2. '6, 10, and 14' on the surface may indicate the display-side 2-2th surface S4 of the second lens L2. '7, 9, and 15' on the surface may indicate the user's eye-side 3-1th surface S5 of the third lens L3. '8 and 16' on the surface may indicate the display-side 3-2th surface S6 of the third lens L3. Referring to Table 6, in the lens assembly 200 according to an embodiment, the user's eye-side 1-1th surface S1 of the first lens L1, the user's eye-side 2-1th surface S3 and display-side 2-2th surface S4 of the second lens L2, and the user's eye-side 3-1th surface S5 and display-side 3-2th surface S6 of the third lens L3 may be formed as aspheric surfaces.

[Table 6]

| | 2 | 5 | 6 | 7 | 8 | 9 | 10 | 11 | 13 | 14 | 15 | 16 |
|---|---|---|---|---|---|---|---|---|---|---|---|---|
| K | 1.08 375 | - 99.0 012 | - 13.8 8565 | - 28.3 465 | - 1.05 537 | - 28.3 465 | - 13.8 8565 | - 99.0 012 | - 99.0 012 | - 13.8 8565 | - 28.3 465 | - 1.05 537 |
| A | - 1.48 E-06 | - 1.63 E-05 | - 4.73 E-30 | 5.18 E-05 | 1.29 E-05 | 5.18 E-05 | - 4.73 E-30 | - 1.63 E-05 | - 1.63 E-05 | - 4.73 E-30 | 5.18 E-05 | 1.29 E-05 |
| B | 9.02 E-09 | 5.72 E-07 | 1.21 E-42 | - 1.11 E-06 | - 2.32 E-07 | - 1.11 E-06 | 1.21 E-42 | 5.72 E-07 | 5.72 E-07 | 1.21 E-42 | - 1.11 E-06 | - 2.32 E-07 |
| C | 5.42 E-11 | - 7.47 E-09 | - 4.93 E-56 | 1.15 E-08 | 2.30 E-09 | 1.15 E-08 | - 4.93 E-56 | - 7.47 E-09 | - 7.47 E-09 | - 4.93 E-56 | 1.15 E-08 | 2.30 E-09 |
| D | - 9.90 E-13 | 5.43 E-11 | 9.13 E-70 | - 6.77 E-11 | - 1.28 E-11 | - 6.77 E-11 | 9.13 E-70 | 5.43 E-11 | 5.43 E-11 | 9.13 E-70 | - 6.77 E-11 | - 1.28 E-11 |
| E | 5.88 E-15 | - 2.36 E-13 | - 9.23 E-84 | 2.21 E-13 | 3.87 E-14 | 2.21 E-13 | - 9.23 E-84 | - 2.36 E-13 | - 2.36 E-13 | - 9.23 E-84 | 2.21 E-13 | 3.87 E-14 |
| F | - 1.66 E-17 | 6.04 E-16 | 5.26 E-98 | - 3.74 E-16 | - 5.68 E-17 | - 3.74 E-16 | 5.26 E-98 | 6.04 E-16 | 6.04 E-16 | 5.26 E-98 | - 3.74 E-16 | - 5.68 E-17 |
| G | 1.75 E-20 | - 8.33 E-19 | - 1.59 E-112 | 2.47 E-19 | 2.52 E-20 | 2.47 E-19 | - 1.59 E-112 | - 8.33 E-19 | - 8.33 E-19 | - 1.59 E-112 | 2.47 E-19 | 2.52 E-20 |
| H | 0.00 E+00 | 4.73 E-22 | 1.98 E-127 | 1.60 E-23 | 1.27 E-23 | 1.60 E-23 | 1.98 E-127 | 4.73 E-22 | 4.73 E-22 | 1.98 E-127 | 1.60 E-23 | 1.27 E-23 |
| J | 0.00 E+00 | 0.00 E+00 | 0.00 E+00 | 0.00 E+00 | 0.00 E+00 | 0.00 E+00 | 0.00 E+00 | 0.00 E+00 | 0.00 E+00 | 0.00 E+00 | 0.00 E+00 | 0.00 E+00 |

EP 4 682 617 A1

According to an embodiment, the lens assemblies 200 and 300 according to various embodiments of the disclosure may have values meeting each Conditional Equation as shown in Table 7 below.

[Table 7]

| | Embodiment | |
|---|---|---|
| | embodiment of FIGS. 4 and 5 | embodiment of FIGS. 8 and 9 |
| Equation 1 | 0.7 | 0.67 |
| Equation 2 | 0.97 | 1.52 |
| Equation 3 | -60 | -60 |

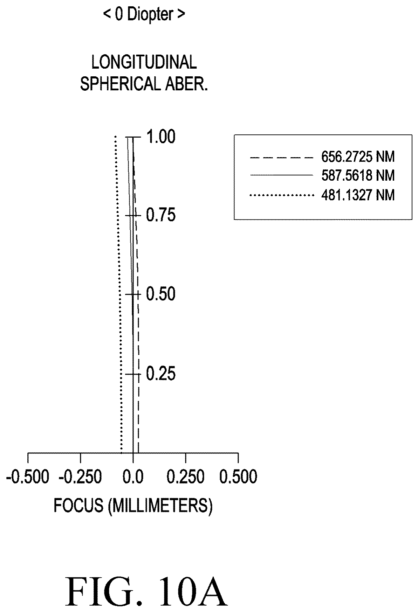

FIG. 10A is a graph illustrating a spherical aberration of a lens assembly according to an embodiment of the disclosure.

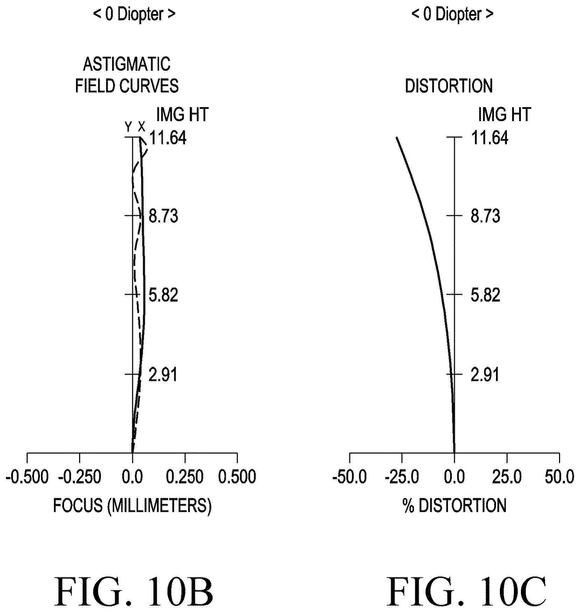

FIG. 10B is a graph illustrating astigmatism of a lens assembly according to an embodiment of the disclosure.

FIG. 10C is a graph illustrating a distortion of a lens assembly according to an embodiment of the disclosure.

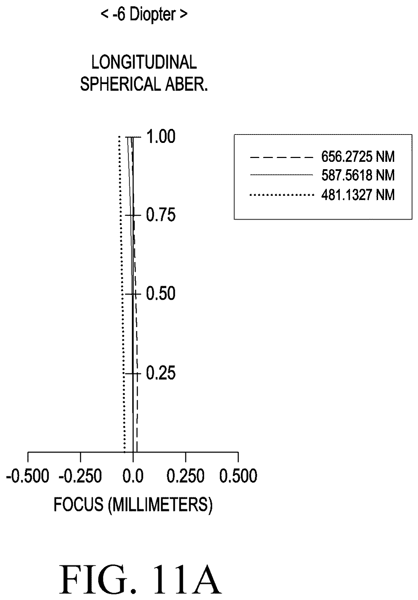

FIG. 11A is a graph illustrating a spherical aberration of a lens assembly according to an embodiment of the disclosure.

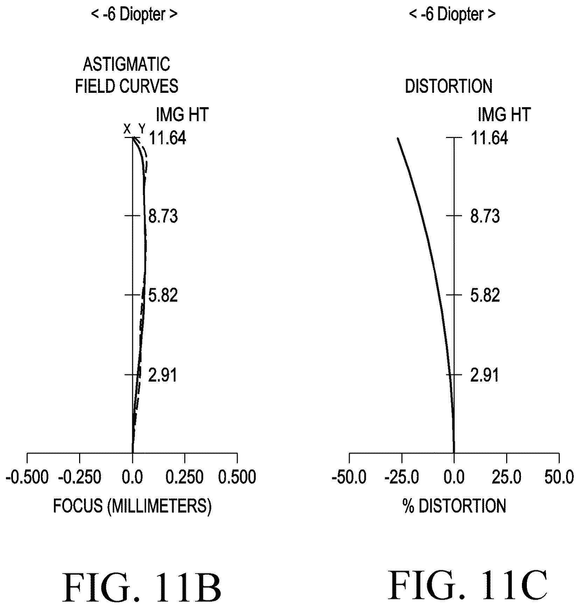

FIG. 11B is a graph illustrating astigmatism of a lens assembly according to an embodiment of the disclosure.

FIG. 11C is a graph illustrating a distortion of a lens assembly according to an embodiment of the disclosure.

FIGS. 10A and 11A are graphs illustrating spherical aberrations of a lens assembly 300, according to various embodiments of the disclosure.

Spherical aberration may refer to the phenomenon that light beams passing through different portions (e.g., the chief portion and the marginal portion) of the lens are focused on different positions.

Referring to FIGS. 10A and 11A, the horizontal axis refers to the degree of longitudinal spherical aberration, and the vertical axis refers to the result of normalization of the distance from the center of the optical axis. FIGS. 10A and 11A may illustrate variations in longitudinal spherical aberration depending on light wavelengths. The longitudinal spherical aberration may be shown for each of light beams whose wavelengths are about 656.2725 nanometers (nm), about 587.5618nm, or about 486.1327nm. Referring to FIGS. 10A and 11A, in a visible light range, the longitudinal spherical aberration of the lens assembly, according to various embodiments of the disclosure, may be limited to be within a range from about +0.050 to -0.050 so that stable optical properties are shown, except for the light having a wavelength of 481.1327nm.

FIGS. 10B and 11B are graphs illustrating astigmatism of the lens assembly 300, according to various embodiments of the disclosure.

Astigmatism may refer to a deviation between the focuses of the light beams passing in the vertical and horizontal directions when the tangential plane or meridian plane of the lens has a different radius from the radius of the sagittal plane of the lens. The tangential plane may be a surface including a curve on the lens positioned in a direction substantially perpendicular to the optical axis from the vertex of the lens, and the sagittal plane may be a surface including a curve on the lens positioned in a second direction substantially perpendicular to the optical axis from the vertex of the lens.

Referring to FIGS. 10B and 11B, the vertical axis IMG HT may denote the image height. Here, the image height may mean the maximum distance from the optical axis O-I to the edge of the display D (half of the diagonal length of the display screen of the display D).

In FIGS. 10B and 11B, the astigmatism of the lens assembly 300 is the result obtained at a wavelength of about 587.5618nm, wherein the dashed line Y may denote the astigmatism in the tangential plane direction (e.g., tangential field curvature), and the solid line X may denote the astigmatism in the sagittal plane direction (e.g., sagittal field curvature). It can be identified from FIG. 10B that the astigmatism may be limited to a range from about +0.050 to -0.050 so that stable optical properties may be shown according to an embodiment. As may be identified through FIG. 11B, even in the state of -6 diopter, astigmatism may be limited within about +0.200 to -0.200.

FIGS. 10C and 11C are graphs illustrating distortion of a lens assembly 300, according to various embodiments of the disclosure.

Distortion occurs because the optical magnification varies depending on the distance from the optical axis O-I. As compared with an image forming on a theoretical imaging plane, an image forming on the actual imaging plane may be shown to be larger or smaller by distortion.

FIGS. 10C and 11C show the results of distortion of the lens assembly 300, which are obtained in a wavelength of about 587.5618nm. The image captured by the lens assembly 300 may cause distortion at a point (e.g., marginal portion) off the optical axis O-I. The distortion is a degree that may commonly occur in an optical device using a lens, and the lens assembly 300 according to one of various embodiments of the disclosure has a distortion rate of less than about ±25 % and may provide good optical properties.

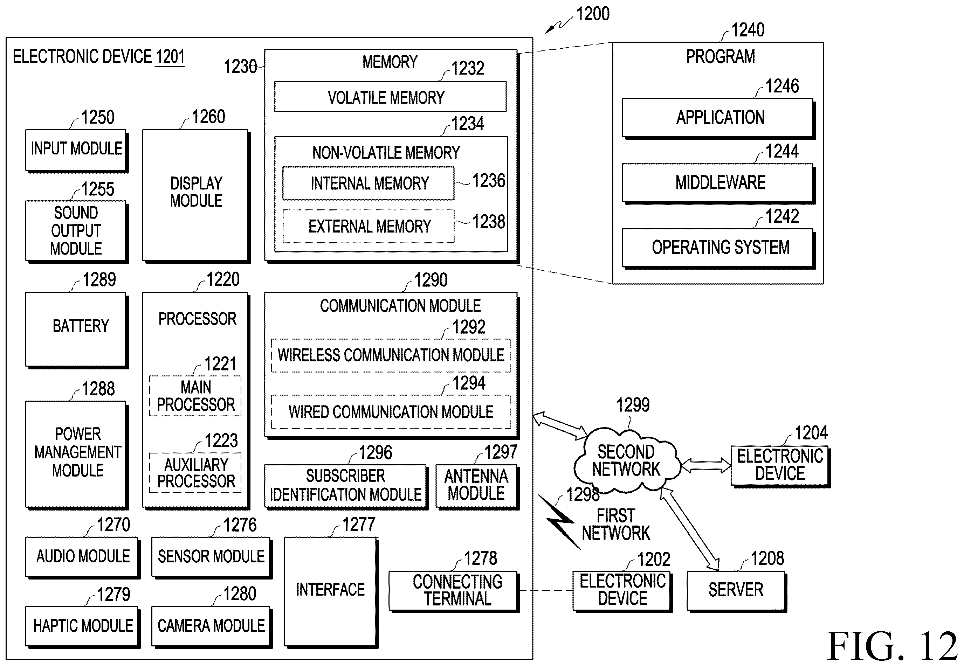

FIG. 12 is a block diagram illustrating an electronic device 1201 (e.g., the electronic device 100 of FIG. 1) (e.g., optical device) in a network environment 1200 according to an embodiment of the disclosure.

Referring to FIG. 12, the electronic device 1201 (e.g., an optical device0 in the network environment 1200 may communicate with at least one of an electronic device 1202 via a first network 1298 (e.g., a short-range wireless communication network), or an electronic device 1204 or a server 1208 via a second network 1299 (e.g., a long-range wireless communication network). In an embodiment, the electronic device 1201 may communicate with the electronic device 1204 via the server 1208. According to another embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module (SIM) 1296, or an antenna module 1297. In some embodiments, at least one (e.g., the display device 1260 or the camera module 1280) of the components may be omitted from the electronic device 1201, or one or more other components may be added in the electronic device 101. According to yet another embodiment, some (e.g., the sensor module 1276, the camera module 1280, or the antenna module 1297) of the components may be integrated into a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to an embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. In an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be configured to use lower power than the main processor 1221 or to be specified for a designated function. The auxiliary processor 1223 may be implemented as separate from, or as part of the main processor 1221.

The auxiliary processor 1223 may be configured to control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 123. According to another embodiment, the auxiliary processor 1223 (e.g., the neural processing unit) may include a hardware structure specified for artificial intelligence model processing. The artificial intelligence model may be generated via machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semisupervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may be configured to store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by other component (e.g., the processor 1220) of the electronic device 1201, from the outside (e.g., a user) of the electronic device 1201. The input module 1250 may include, for example, a microphone, a mouse, a keyboard, keys (e.g., buttons), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to another embodiment, the receiver may be implemented as separate from, or as part of the speaker.

The display module 1260 may visually provide information to the outside (e.g., a user) of the electronic device 1201. The display 1260 may include, for example, a display, a hologram device, or a projector and control circuitry to control a corresponding one of the display, hologram device, and projector. According to another embodiment, the display 1260 may include a touch sensor configured to detect a touch, or a pressure sensor configured to measure the intensity of a force generated by the touch.

The audio module 1270 may convert a sound into an electrical signal and vice versa. In an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 101, and then generate an electrical signal or data value corresponding to the detected state. According to another embodiment, the sensor module 1276 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. In another embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, an HDMI connector, a USB connector, an SD card connector, or an audio connector (e.g., a headphone connector).

The haptic module 1279 may convert an electrical signal into a mechanical stimulus (e.g., a vibration or motion) or electrical stimulus which may be recognized by a user via his tactile sensation or kinesthetic sensation. According to another embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. In an embodiment, the power management module 1288 may be implemented as at least part of, for example, a power management integrated circuit (PMIC).

The battery 1289 may supply power to at least one component of the electronic device 1201. According to one embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to one embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device 1204 via a first network 1298 (e.g., a short-range communication network, such as Bluetooth™, wireless-fidelity (Wi-Fi) direct, or infrared data association (IrDA)) or a second network 1299 (e.g., a long-range communication network, such as a legacy cellular network, a fifth generation (5G) network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 1292 may identify or authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g.,

the millimeter wave (mmWave) band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1297 may transmit or receive a signal or power to or from the outside (e.g., the external electronic device). According to an embodiment, the antenna module 1297 may include one antenna including a radiator formed of a conductor or conductive pattern formed on a substrate (e.g., a printed circuit board (PCB)). In an embodiment, the antenna module 1297 may include a plurality of antennas (e.g., an antenna array). In this case, at least one antenna appropriate for a communication scheme used in a communication network, such as the first network 1298 or the second network 1299, may be selected from the plurality of antennas by, e.g., the communication module 1290. The signal or the power may then be transmitted or received between the communication module 1290 and the external electronic device via the selected at least one antenna. According to another embodiment, other parts (e.g., radio frequency integrated circuit (RFIC)) than the radiator may be further formed as part of the antenna module 1297.

According to various embodiments, the antenna module 1297 may form a mmWave antenna module. According to another embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

In an embodiment, instructions or data may be transmitted or received between the electronic device 1201 and the external electronic device 1204 via the server 1208 coupled with the second network 1299. The external electronic devices 1202 and 1204 each may be a device of the same or a different type from the electronic device 1201. According to another embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example.

The electronic device 1201 may provide ultra low-latency services using, e.g., distributed computing or mobile edge computing. In another embodiment, the external electronic device 1204 may include an Internet-of-things (IoT) device. The server 1208 may be an intelligent server using machine learning and/or a neural network. According to another embodiment, the external electronic device 1204 or the server 1208 may be included in the second network 1299. The electronic device 1201 may be applied to intelligent services (e.g., smart home, smart city, smart car, or health-care) based on 5G communication technology or IoT-related technology.

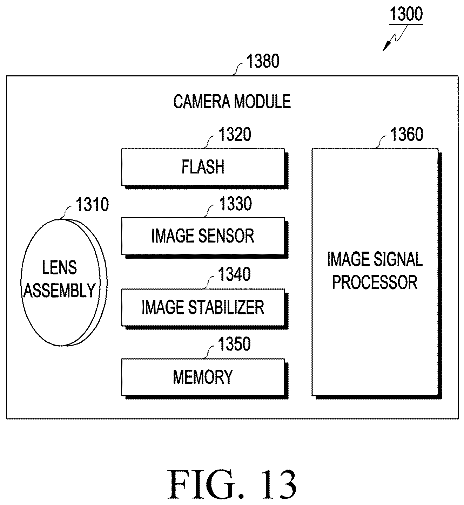

FIG. 13 is a block diagram 1300 illustrating the camera module 1380 according to an embodiment of the disclosure.

Referring to FIG. 13, the camera module 1380 may include a lens assembly 1310 (e.g., 200 or 300), a flash 1320, an image sensor 1330 (e.g., IS), an image stabilizer 1340, memory 1350 (e.g., buffer memory (e.g., the memory 1230 of FIG. 12)), or an image signal processor 1360. The lens assembly 1310 may collect light emitted or reflected from an object whose image is to be taken. The lens assembly 1310 may include one or more lenses. In an embodiment, the camera module 1380 may include a plurality of lens assemblies 1310. In such a case, the camera module 1380 may form, for example, a dual camera, a 360-degree camera, or a spherical camera. Some of the plurality of lens assemblies 1310 may have the same lens attribute (e.g., view angle, focal length, auto-focusing, f number (Fno), or optical zoom), or at least one lens assembly may have one or more lens attributes different from those of another lens assembly. The lens assembly 1310 may include, for example, a wide-angle lens or a telephoto lens.

The flash 1320 may emit light that is used to reinforce light reflected from an object. According to an embodiment, the flash 1320 may include one or more light emitting diodes (LEDs) (e.g., a red-green-blue (RGB) LED, a white LED, an infrared (IR) LED, or an ultraviolet (UV) LED) or a xenon lamp. The image sensor 1330 may obtain an image corresponding to an object by converting light emitted or reflected from the object and transmitted via the lens assembly 1310 into an electrical signal. According to another embodiment, the image sensor 1330 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 1330 may be implemented using, for example, a charge coupled device (CCD) sensor or a complementary metal oxide semiconductor (CMOS) sensor.

The image stabilizer 1340 may move the image sensor 1330 or at least one lens included in the lens assembly 1310 in a particular direction, or control an operational attribute (e.g., adjust the read-out timing) of the image sensor 1330 in response to the movement of the camera module 1380 or the electronic device 1201 including the camera module 180. This makes it possible to compensate for at least some of the negative effects of the movement on the image being taken. The image stabilizer 1340 may sense such a movement by the camera module 1380 or the electronic device 1201 using a gyro sensor (not shown) or an acceleration sensor (not shown) disposed inside or outside the camera module 1380. According to another embodiment, the image stabilizer 1340 may be implemented, for example, as an optical image stabilizer. The memory 1350 may store, at least temporarily, at least part of an image obtained via the image sensor 1330 for a subsequent image processing task. In an example, if image capturing is delayed due to shutter lag or multiple images are quickly captured, a raw image obtained (e.g., a Bayer-patterned image, a high-resolution image) may be stored in the memory 1350, and its corresponding copy image (e.g., a lowresolution image) may be previewed via the display device 1260. Thereafter, if a specified condition is met (e.g., by a user's input or system command), at least part of the raw image stored in the memory 1350 may be obtained and processed, for example, by the image signal processor 1360. The memory 1350 may be configured as at least part of the memory 1230 of FIG. 12 or as a separate memory that is operated independently from the memory.

The image signal processor 1360 may perform one or more image processing with respect to an image obtained via the image sensor 1330 or an image stored in the memory 1350. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 1360 may perform control (e.g., exposure time control or read-out timing control) with respect to at least one (e.g., the image sensor 1330) of the components included in the camera module 1380. An image processed by the image signal processor 1360 may be stored back in the memory 1350 for further processing, or may be provided to an external component (e.g., the memory 1230, the display device 1260, the electronic device 1202, the electronic device 1204, or the server 1208) outside the camera module 1380. According to another embodiment, the image signal processor 1360 may be configured as at least part of the processor 1220, or as a separate processor that is operated independently from the processor 1220. If the image signal processor 1360 is configured as a separate processor from the processor 1220, at least one image processed by the image signal processor 1360 may be displayed, by the processor 1220, via the display device 1260 as it is or after being further processed.

In an embodiment, the electronic device 1201 may include a plurality of camera modules 1380 having different attributes or functions. In such a case, at least one of the plurality of camera modules 1380 may form, for example, a wide-angle camera and at least another of the plurality of camera modules180 may form a telephoto camera. Similarly, at least one of the plurality of camera modules 1380 may form, for example, a front camera and at least another of the plurality of camera modules180 may form a rear camera.

The electronic device according to various embodiments may be one of various types of devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to one embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to another embodiment, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to some embodiments, operations performed by the module, the program, or another component may be carried out sequentially, in parallel, repeatedly, or heuristically, or one or more of the operations may be executed in a different order or omitted, or one or more other operations may be added.

A lens assembly according to an embodiment of the disclosure may comprise a first lens having a positive refractive power and a fixed position, a second lens having a positive refractive power and being movable in position with respect to the optical axis, and a third lens having a positive refractive power and being movable in position with respect to the optical axis together with the second lens. According to an embodiment, a mirror coating layer may be disposed on one surface, which is configured to face the display, of at least one of the second lens or the third lens. The first lens, the second lens, and the third lens may be sequentially disposed along the optical axis from a user's eye side to a display side. A ratio of a distance from one surface of the first lens facing the user's eye side to an imaging surface of the display and a distance from one surface of the second lens facing the user's eye side to the imaging surface of the display may satisfy a condition defined by Conditional Equation 1.

[Conditional Equation 1]

$$1.55 > T_{diopter} / TTL, \text{ wherein total track length (TTL)'}$$

denotes the distance from the user's eye-side surface of the first lens to the imaging surface of the display, and 'T$_{diopter}$' denotes the distance from the user's eye-side surface of the second lens to the imaging surface of the display.

According to another embodiment, a ratio of the distance from the user's eye side of the first lens to the imaging surface of the display and the maximum image height of the imaging surface may satisfy a condition defined by Conditional Equation 2.

## [Conditional Equation 2]

$$0.65 \leq TTL / ImgH \leq 1.0$$

wherein 'total track length (TTL)' denotes the distance from the user's eye-side surface of the first lens to the imaging surface of the display, and 'ImgH' denotes the maximum image height of the imaging surface.

According to an embodiment, a second film layer F2 may be disposed adjacent to the user's eye-side surface of the display.

In an embodiment, the first film layer F1 may include a first polarizer 101, a first 1/4 wavelength plate 103, a reflective polarizer 102, and a first anti-reflection film 104.

According to another embodiment, the mirror coating layer may be a beam splitter.

According to yet another embodiment, the second film layer may include a second 1/4 wavelength plate, a second polarizer, and a second reflective polarizer.

According to an embodiment, the first lens may include a 1-1th surface S1 facing the user's eye side, and a 1-2th surface S2 facing the display side, wherein the first film layer is attached to the 1-2th surface. The 1-2th surface may be a flat surface.

According to still another embodiment, one surface of the lens to which the mirror coating layer may be attached satisfies a condition defined by Conditional Equation 3.

## [Conditional Equation 3]

$$L_{Radius} < -50$$

Here, $L_{Radius}$ represents the refractive power of the one surface of the lens to which the mirror coating layer is attached.

According to an embodiment, the second lens may include a 2-1th surface S3 facing the user's eye side, and a 2-2th surface S4 facing the display side. The mirror coating layer 105 may be disposed on the 2-2th surface S4. The 2-2th surface S4 may be a curved surface convex toward the display side.

In an embodiment, the third lens may include a 3-1th surface S5 facing the user's eye side, and a 3-2th surface S6 facing the display side. The mirror coating layer 105 may be disposed on the 3-2th surface S6. The 3-2th surface S6 may be a curved surface convex toward the display side.

According to an embodiment, at least one lens among lenses L1, L2, and L3 included in the lens assembly may be configured as a lens including an aspheric surface.

In another embodiment, lenses L1, L2, and L3 included in the lens assembly may be configured as plastic lenses.

According to an embodiment, the second lens L2 and the third lens L3 may be configured to be movable in a direction of the optical axis to enable diopter adjustment.

In yet another embodiment, a polarization direction of the first 1/4 wavelength plate 103 and a polarization direction of the second 1/4 wavelength plate 106 may be perpendicular to each other.

A wearable electronic device according to an embodiment of the disclosure may comprise a lens assembly having at least three lenses arranged along an optical axis from a user's eye side to a display. The lens assembly may include a first lens closest to the user's eye side, having a positive refractive power, and having a fixed position, a first film layer being attached onto one surface of the first lens, a second lens having a positive refractive power and repositionable with respect to the optical axis, and a third lens having a positive refractive power and repositionable together with the second lens with respect to the optical axis. According to an embodiment, a mirror coating layer may be disposed on one surface, which is configured to face the display, of at least one of the second lens or the third lens.

According to another embodiment, a ratio of a distance from the user's eye-side surface of the first lens to an imaging surface of the display to a distance from the user's eye-side surface of the second lens to the imaging surface of the display may meet Conditional Equation 1.

## [Conditional Equation 1]

$$1.55 > T_{diopter} / TTL,$$

wherein 'total track length (TTL)' denotes the distance from the user's eye-side surface of the first lens to the imaging surface of the display, and '$T_{diopter}$' denotes the distance from the user's eye-side surface of the second lens to the imaging surface of the display.

According to yet another embodiment, a ratio of the distance from the user's eye side of the first lens to the imaging surface of the display and the maximum image height of the imaging surface may satisfy a condition defined by Conditional Equation 2.

[Conditional Equation 2]

$$0.65 \leq TTL / ImgH \leq 1.0$$

wherein 'total track length (TTL)' denotes the distance from the user's eye-side surface of the first lens to the imaging surface of the display, and 'ImgH' denotes the maximum image height of the imaging surface.

According to an embodiment, a second film layer F2 may be disposed adjacent to the user's eye-side surface of the display.

Augmented reality (AR), virtual reality (VR), mixed reality (MR), or extended reality (XR) may be applied to the wearable electronic device.

According to an embodiment, the wearable electronic device may be of a visual see-through (VST) type.

A head-mounted wearable device is configured using a single lens, but it may be difficult to implement a vision correction function. In some cases, a plurality of lenses are used, but it may be difficult to achieve slimness.

Objects of the disclosure are not limited to the foregoing, and other unmentioned objects would be apparent to one of ordinary skill in the art from the following description.

Since the wearable electronic device (e.g., AR/VR glasses) have a fixed focal length, it is difficult to correct refractive errors (e.g., eye refractions due to eye disorders, such as presbyopia, myopia, or hyperopia) through the system (e.g., AR/VR system) itself, and the resolution of the virtual image output may be limited. In contrast, the wearable electronic device 100 of the disclosure enables display of a virtual image in various focal lengths by extending the optical path of the incident light, making it possible to correct vision and increase the image resolution.

The wearable electronic device 100 of the disclosure may, for example, provide a vision correction function to the user by adjusting the diopter as at least some lenses are movable and provide at least one film layer F1 and F2 and at least one mirror coating layer 105 to extend and/or adjust the length of the optical path of light, adjusting the focal length or increasing the quality of the output image and reducing the size of the overall optical system.

The wearable electronic device 100 of the disclosure may be configured so that the second lens L2 and the third lens L3 are movable with respect to the first lens L1 with the first lens L1 fixed in the wearable electronic device 100, performing a vision correction function according to diopter adjustment.

While the disclosure has been shown and described with reference to various embodiments thereof, it will be understood by those skilled in the art that various changes in form and details may be made therein without departing from the spirit and scope of the disclosure as defined by the appended claims and their equivalents.

**Claims**

1. A lens assembly (200) comprising:

   a first lens (L1) having a positive refractive power and a fixed position;
   a second lens (L2) having a positive refractive power and being movable in position with respect to an optical axis (O-I); and
   a third lens (L3) having a positive refractive power and being movable in position with respect to the optical axis together with the second lens,
   wherein a first film layer (F1) is disposed between the first lens and the second lens,
   wherein a mirror coating layer (105) is disposed on one surface, which is configured to face a display (D), of at least one of the second lens or the third lens,
   wherein the first lens, the second lens, and the third lens are sequentially disposed along the optical axis from a user's eye side to a display side, and
   wherein a ratio of a distance from one surface of the first lens facing the user's eye side to an imaging surface of the display to a distance from one surface of the second lens facing the user's eye side to the imaging surface of the display satisfies a condition defined by:

$$1.55 > T_{diopter} / TTL,$$

   where 'total track length (TTL)' represents the distance from the user's eye side of the first lens to the imaging surface of the display, and 'T$_{diopter}$' represents the distance from one surface of the second lens facing the user's eye side to the imaging surface of the display.

2. The lens assembly of claim 1, wherein a ratio of the distance from the user's eye side of the first lens to the imaging surface of the display and a maximum image height of the imaging surface satisfies a condition defined by:

$$0.65 \leq \text{TTL} / \text{ImgH} \leq 1.0,$$

where 'total track length (TTL)' represents the distance from the one surface of the first lens facing the user's eye side to the imaging surface of the display, and 'ImgH' represents the maximum image height of the imaging surface of the display.

3. The lens assembly of claim 1 or 2, wherein a second film layer (F2) is disposed to be adjacent to one surface of the display facing the user's eye side..

4. The lens assembly of claim 3, wherein the first film layer (F1) includes a first polarizer (101), a reflective polarizer (102), a first 1/4 wavelength plate (103), and a first anti-reflection (AR) film (104).

5. The lens assembly of any one of claims 1 to 4, wherein the mirror coating layer is a beam splitter.

6. The lens assembly of claim 4, wherein the second film layer (F2) includes a second 1/4 wavelength plate (106), a second polarizer (107), and a second anti-reflective film (108).

7. The lens assembly of any one of claims 1 to 6,

wherein the first lens includes a 1-1th surface (S1) facing the user's eye side, and a 1-2th surface (S2) facing the display side,
wherein the first film layer (F1) is attached to the 1-2th surface (S2), and
wherein the 1-2th surface is a flat surface.

8. The lens assembly of any one of claims 1 to 7, wherein one surface of the lens to which the mirror coating layer is attached satisfies a condition defined by:

$$L_{Radius} < -50,$$

where 'L$_{Radius}$' represents the refractive power of the one surface of the lens to which the mirror coating layer is attached.

9. The lens assembly of any one of claims 1 to 8,

wherein the second lens includes a 2-1th surface (S3) facing the user's eye side, and a 2-2th surface (S4) facing the display side,
wherein the mirror coating layer (105) is attached to the 2-2th surface (S4), and
wherein the 2-2th surface (S4) is a curved surface convex toward the display side.

10. The lens assembly of any one of claims 1 to 8,

wherein the third lens includes a 3-1th surface (S5) facing the user's eye side, and a 3-2th surface (S6) facing the display side,
wherein the mirror coating layer (105) is disposed on the 3-2th surface (S6), and
wherein the 3-2th surface (S6) is a curved surface convex toward the display side.

11. The lens assembly of any one of claims 1 to 10, wherein at least one lens among lenses (L1, L2, L3) included in the lens assembly is configured as a lens including an aspheric surface.

12. The lens assembly of any one of claims 1 to 11, wherein the lenses (L1, L2, L3) included in the lens assembly are configured as plastic lenses.

13. The lens assembly of any one of claims 1 to 12, wherein the second lens (L2) and the third lens (L3) are configured to be movable in a direction of the optical axis to enable diopter adjustment.

14. The lens assembly of claim 6, wherein a polarization direction of the first 1/4 wavelength plate (103) and a polarization direction of the second 1/4 wavelength plate (106) are perpendicular to each other.

15. A wearable electronic device (100) comprising:

a lens assembly (200, 300) of any one of claims 1 to 14,
wherein the wearable electronic device is configured to provide augmented reality (AR) function, virtual reality (VR) function, mixed reality (MR) function, or extended reality (XR) function.

FIG. 1

## FIG. 2A

## FIG. 2B

FIG. 3

# FIG. 4

FIG. 5

< 0 Diopter >

LONGITUDINAL
SPHERICAL ABER.

FIG. 6A

FIG. 6B

FIG. 6C

< -6 Diopter >

LONGITUDINAL
SPHERICAL ABER.

| | | 656.2725 NM |
| --- | --- | --- |
| | | 587.5618 NM |
| | | 481.1327 NM |

FOCUS (MILLIMETERS)

# FIG. 7A

< -6 Diopter >

ASTIGMATIC
FIELD CURVES

FIG. 7B

< -6 Diopter >

DISTORTION

FIG. 7C

FIG. 8

FIG. 9

< 0 Diopter >

LONGITUDINAL
SPHERICAL ABER.

| | 656.2725 NM |
| | 587.5618 NM |
| | 481.1327 NM |

FOCUS (MILLIMETERS)

# FIG. 10A

< 0 Diopter >

< 0 Diopter >

ASTIGMATIC
FIELD CURVES

DISTORTION

IMG HT

IMG HT

Y X 11.64

11.64

8.73

8.73

5.82

5.82

2.91

2.91

-0.500 -0.250  0.0  0.250  0.500

-50.0 -25.0  0.0  25.0  50.0

FOCUS (MILLIMETERS)

% DISTORTION

FIG. 10B

FIG. 10C

< -6 Diopter >

LONGITUDINAL
SPHERICAL ABER.

| | |
|---|---|
| – – – – | 656.2725 NM |
| ──────── | 587.5618 NM |
| ·············· | 481.1327 NM |

FOCUS (MILLIMETERS)

# FIG. 11A

< -6 Diopter >                          < -6 Diopter >

ASTIGMATIC
FIELD CURVES                              DISTORTION

FIG. 11B                              FIG. 11C

FIG. 12

EP 4 682 617 A1

1300

1380

CAMERA MODULE

1320

FLASH

1310

1330

LENS ASSEMBLY

IMAGE SENSOR

1360

IMAGE SIGNAL PROCESSOR

1340

IMAGE STABILIZER

1350

MEMORY

# FIG. 13

## INTERNATIONAL SEARCH REPORT

| International application No. |
| --- |
| **PCT/KR2024/005479** |

| A. | CLASSIFICATION OF SUBJECT MATTER |
| --- | --- |

**G02B 27/01**(2006.01)i; **G02B 9/12**(2006.01)i; **G02B 27/10**(2006.01)i; **G02B 27/28**(2006.01)i; **G02B 27/09**(2006.01)i; **G02B 3/02**(2006.01)i; **G06F 1/16**(2006.01)i; **G02B 27/00**(2006.01)i; **G02B 1/04**(2006.01)i; **G06T 19/00**(2011.01)i

According to International Patent Classification (IPC) or to both national classification and IPC

| B. | FIELDS SEARCHED |
| --- | --- |

Minimum documentation searched (classification system followed by classification symbols)

G02B 27/01(2006.01); G02B 13/00(2006.01); G02B 27/00(2006.01); G02B 27/28(2006.01); G02B 3/00(2006.01); G02B 5/20(2006.01); G02B 9/16(2006.01); G02B 9/60(2006.01); G02B 9/64(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 렌즈 어셈블리(lens assembly), 굴절력(refractive power), 광축(optical axis), 필름층(film layer), 미러 코팅층(mirror coating layer), 결상면(image forming surface), 눈(eye), 디스플레이(display)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0128465 A (LG INNOTEK CO., LTD.) 20 September 2022 (2022-09-20)<br>See paragraphs [0044]-[0135]; claim 1; and figure 6. | 1-4,6,14 |
| Y | KR 10-2019-0020826 A (APPLE INC.) 04 March 2019 (2019-03-04)<br>See paragraphs [0024] and [0031]; and figure 2. | 1-4,6,14 |
| Y | KR 10-2020-0092584 A (SAMSUNG ELECTRONICS CO., LTD.) 04 August 2020 (2020-08-04)<br>See claim 1. | 2 |
| A | KR 10-2017-0073210 A (KOLEN CO., LTD.) 28 June 2017 (2017-06-28)<br>See claim 1; and figure 3. | 1-4,6,14 |
| A | US 2019-0004286 A1 (SAMSUNG ELECTRONICS CO., LTD.) 03 January 2019 (2019-01-03)<br>See claim 1; and figure 1. | 1-4,6,14 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 July 2024** | **01 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/005479** |

| **Box No. II** | **Observations where certain claims were found unsearchable (Continuation of item 2 of first sheet)** |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☑ Claims Nos.: **5, 7-13, 15**
because they are dependent claims and are not drafted in accordance with the second and third sentences of Rule 6.4(a).

Form PCT/ISA/210 (continuation of first sheet) (July 2022)

INTERNATIONAL SEARCH REPORT
Information on patent family members

International application No.

**PCT/KR2024/005479**

| Patent document cited in search report | | | Publication date (day/month/year) | Patent family member(s) | | | Publication date (day/month/year) |
|---|---|---|---|---|---|---|---|
| KR | 10-2022-0128465 | A | 20 September 2022 | CN | 116802540 | A | 22 September 2023 |
| | | | | EP | 4293406 | A1 | 20 December 2023 |
| | | | | JP | 2024-507134 | A | 16 February 2024 |
| | | | | KR | 10-2022-0115035 | A | 17 August 2022 |
| | | | | KR | 10-2023-0089561 | A | 20 June 2023 |
| | | | | KR | 10-2023-0094048 | A | 27 June 2023 |
| | | | | KR | 10-2443674 | B1 | 16 September 2022 |
| | | | | TW | 202300970 | A | 01 January 2023 |
| | | | | TW | 202343069 | A | 01 November 2023 |
| | | | | US | 2024-0111130 | A1 | 04 April 2024 |
| | | | | WO | 2022-173223 | A1 | 18 August 2022 |
| | | | | WO | 2023-113446 | A1 | 22 June 2023 |
| KR | 10-2019-0020826 | A | 04 March 2019 | AU | 2017-307221 | A1 | 08 February 2018 |
| | | | | AU | 2017-307221 | B2 | 29 August 2019 |
| | | | | CN | 110268301 | A | 20 September 2019 |
| | | | | CN | 110268301 | B | 01 April 2022 |
| | | | | CN | 110703444 | A | 17 January 2020 |
| | | | | CN | 110703444 | B | 26 November 2021 |
| | | | | CN | 114740621 | A | 12 July 2022 |
| | | | | EP | 3479164 | A1 | 08 May 2019 |
| | | | | EP | 3479164 | B1 | 08 May 2024 |
| | | | | EP | 4318080 | A2 | 07 February 2024 |
| | | | | EP | 4318080 | A3 | 10 April 2024 |
| | | | | JP | 2019-526075 | A | 12 September 2019 |
| | | | | JP | 6687805 | B2 | 28 April 2020 |
| | | | | KR | 10-2185156 | B1 | 01 December 2020 |
| | | | | US | 10203489 | B2 | 12 February 2019 |
| | | | | US | 10591707 | B2 | 17 March 2020 |
| | | | | US | 10928613 | B2 | 23 February 2021 |
| | | | | US | 11740446 | B2 | 29 August 2023 |
| | | | | US | 2018-0039052 | A1 | 08 February 2018 |
| | | | | US | 2019-0146198 | A1 | 16 May 2019 |
| | | | | US | 2020-0166738 | A1 | 28 May 2020 |
| | | | | US | 2021-0132349 | A1 | 06 May 2021 |
| | | | | US | 2023-0333359 | A1 | 19 October 2023 |
| | | | | WO | 2018-026633 | A1 | 08 February 2018 |
| KR | 10-2020-0092584 | A | 04 August 2020 | EP | 3881116 | A1 | 22 September 2021 |
| | | | | EP | 3881116 | B1 | 27 March 2024 |
| | | | | US | 11500176 | B2 | 15 November 2022 |
| | | | | US | 2020-0241250 | A1 | 30 July 2020 |
| | | | | WO | 2020-153768 | A1 | 30 July 2020 |
| KR | 10-2017-0073210 | A | 28 June 2017 | CN | 106896469 | A | 27 June 2017 |
| | | | | KR | 10-1780432 | B1 | 21 September 2017 |
| | | | | US | 2017-0176718 | A1 | 22 June 2017 |
| | | | | US | 9715084 | B2 | 25 July 2017 |
| US | 2019-0004286 | A1 | 03 January 2019 | CN | 109212729 | A | 15 January 2019 |
| | | | | CN | 109212729 | B | 21 October 2022 |
| | | | | EP | 3422069 | A1 | 02 January 2019 |
| | | | | KR | 10-2019-0003113 | A | 09 January 2019 |
| | | | | KR | 10-2436510 | B1 | 25 August 2022 |

Form PCT/ISA/210 (patent family annex) (July 2022)

**INTERNATIONAL SEARCH REPORT**
Information on patent family members

| International application No. |
|---|
| **PCT/KR2024/005479** |

| Patent document cited in search report | Publication date (day/month/year) | Patent family member(s) | Publication date (day/month/year) |
|---|---|---|---|
| | | US 10908399 B2 | 02 February 2021 |

Form PCT/ISA/210 (patent family annex) (July 2022)